# EUROPEAN PATENT APPLICATION

(11) **EP 4 822 804 A1**
(43) Date of publication of application: **14.10.2026**
(21) Application number: 24914787.7
(22) Date of filing: 30.07.2024
(51) Int. Cl.: H01M 10/0569, H01M 10/0567, H01M 10/052

(54) **ELECTROLYTE OF LITHIUM METAL BATTERY, LITHIUM METAL BATTERY, BATTERY, AND ELECTRICAL APPARATUS**

(30) Priority: 05.01.2024 CN 202410020226
(71) Applicant: Contemporary Amperex Technology Co., Limited, Ningde, Fujian 352100 (CN)
(72) Inventor: WANG, Hansen, Ningde, Fujian 352100 (CN); FENG, Fuxiang, Ningde, Fujian 352100 (CN); ZHANG, Rupeng, Ningde, Fujian 352100 (CN); YAN, Xiaolin, Ningde, Fujian 352100 (CN); SUN, Juanjuan, Ningde, Fujian 352100 (CN); GE, Xiaoming, Ningde, Fujian 352100 (CN); OUYANG, Chuying, Ningde, Fujian 352100 (CN)
(74) Representative: Kraus & Lederer PartGmbB
(86) International application number: PCT/CN2024/108516
(87) International publication number: WO 2025/145565

(57) **Abstract**

An electrolyte for lithium metal battery, a lithium metal battery, a battery, and an electric apparatus are provided. The electrolyte for lithium metal battery includes a main solvent, a diluent, and a lithium salt, where a molar concentration of the lithium salt is 1 mol/L to 4 mol/L, and a viscosity of the electrolyte is less than or equal to 5.5 mPa·s. This can improve cycling performance of a lithium metal battery.

## Description

### CROSS-REFERENCE TO RELATED APPLICATIONS

This application claims priority to Chinese Patent Application No. 202410020226.1, filed on January 5, 2024 and entitled "ELECTROLYTE FOR LITHIUM METAL BATTERY, LITHIUM METAL BATTERY, BATTERY, AND ELECTRIC APPARATUS", which is incorporated herein by reference in its entirety.

### TECHNICAL FIELD

This application pertains to the technical field of batteries, in particular, relating to an electrolyte for lithium metal battery, a lithium metal battery, a battery, and an electric apparatus.

### BACKGROUND

Lithium metal batteries are characterized by advantages such as high capacity and are therefore widely used in electronic devices, such as mobile phones, laptops, electric scooters, electric vehicles, electric aircraft, electric ships, electric toy cars, electric toy ships, electric toy aircraft, and electric tools.

The electrolyte is a critical component of lithium metal batteries, significantly affecting performance of lithium metal batteries. However, cycling performance of current lithium metal batteries remains suboptimal and requires further improvement.

### SUMMARY

The embodiments of this application provide an electrolyte for lithium metal battery, a lithium metal battery, a battery, and an electric apparatus, capable of improving cycling performance of lithium metal batteries.

In a first aspect, the embodiments of this application provide an electrolyte for lithium metal battery, where the electrolyte includes a main solvent, a diluent, and a lithium salt; a molar concentration of the lithium salt is 1 mol/L to 4 mol/L, and a viscosity of the electrolyte is less than or equal to 5.5 mPa·s.

Thus, in the embodiments of this application, the molar concentration of the lithium salt in the electrolyte is relatively high, for example, 1 mol/L to 4 mol/L, enabling the lithium salt to form a solvation structure with the main solvent, so that a certain molar concentration of the lithium salt is maintained even in the later stage of cycling. Additionally, since the electrolyte further includes the diluent, the viscosity of the electrolyte is relatively low, and the ionic conductivity is relatively high, effectively reducing polarization growth in the lithium metal battery and enhancing cycling performance of the lithium metal battery.

In some embodiments, the viscosity of the electrolyte is less than or equal to 4 mPa·s. The relatively low viscosity of the electrolyte system facilitates reduced polarization and enhances the cycling performance of the lithium metal battery.

In some embodiments, an ionic conductivity of the electrolyte is 2 mS/cm to 5 mS/cm; optionally, 3 mS/cm to 5 mS/cm. When the ionic conductivity of the electrolyte is within the above range, it is beneficial for enhancing the cycling performance of the lithium metal battery.

In some embodiments, the molar concentration of the lithium salt is 2 mol/L to 3.5 mol/L. When the molar concentration of the lithium salt is within the above range, it can form, with the main solvent, a solvation structure having a high molar concentration. Although there is some loss of lithium salt during the cycling of the lithium metal battery, due to the relatively high molar concentration of the lithium salt, a certain concentration of lithium salt is maintained in the later stage of cycling of the lithium metal battery, reducing polarization growth and achieving long-term stable cycling of the lithium metal battery.

In some embodiments, the lithium salt includes at least one of a fluorine-containing lithium salt, lithium bis(oxalate)borate, and lithium perchlorate.

In some embodiments, the fluorine-containing lithium salt includes at least one of a fluorine-containing sulfonimide lithium salt, a fluorine-containing phosphate lithium salt, a fluorine-containing borate lithium salt, a fluorine-containing oxalate phosphate lithium salt, lithium hexafluoroarsenate, lithium trifluoromethanesulfonate, and lithium difluoro(oxalate)borate. Optionally, the fluorine-containing lithium salt includes a fluorine-containing sulfonimide lithium salt.

In some embodiments, the fluorine-containing sulfonimide lithium salt includes at least one of lithium bis(fluorosulfonyl)imide and lithium bis(trifluoromethanesulfonyl)imide. Further optionally, the fluorine-containing lithium salt includes lithium bis(fluorosulfonyl)imide.

In some embodiments, the fluorine-containing phosphate lithium salt includes at least one of lithium hexafluorophosphate and lithium difluorophosphate.

In some embodiments, the fluorine-containing borate lithium salt includes at least one of lithium tetrafluoroborate and lithium difluoroborate.

In some embodiments, the fluorine-containing oxalate phosphate lithium salt includes at least one of lithium difluoro(oxalate)phosphate and lithium tetrafluoro(oxalate)phosphate.

The above lithium salts, in combination with the main solvent, enable the dissolution of lithium salts with high molar concentrations in the main solvent and, in cooperation with the diluent, form a solvation structure with a localized high molar concentration.

In some embodiments, based on a total mass of the main solvent and the diluent, a mass percentage of the main solvent is 10% to 80%; optionally, 20% to 40%; optionally, 30% to 40%. When the mass percentage of the main solvent is within the above range, the solvent molecules of the main solvent can participate in the construction of the solvation structure, with substantially no free main solvent molecules.

In some embodiments, based on the total mass of the main solvent and the diluent, a mass percentage of the diluent is 20% to 90%; optionally, 60% to 80%; optionally, 60% to 70%. When the mass percentage of the diluent is within the above range, a substance amount of the diluent and a substance amount of the lithium salt can satisfy a set range, and the diluent has substantially no effect on the solvation structure, allowing the lithium salt to preferentially form a film in the solvation structure, improving the performance of the SEI film and reducing the risk of capacity drop in the lithium metal battery.

In some embodiments, a relative molecular weight of the main solvent is 40 to 150; optionally, 40 to 125. When the relative molecular weight of the main solvent is within the above range, the main solvent is in a liquid state, and its viscosity is not excessively high, facilitating the formation of the solvation structure with the lithium salt. Due to the relatively small relative molecular weight range of the main solvent, the main solvent does not have a higher mass percentage at the same molar fraction, and even if a material of the main solvent is adjusted, the mass percentage of the main solvent remains relatively small, which is beneficial for increasing a mass percentage of the lithium salt.

In some embodiments, a viscosity of the main solvent is less than or equal to 5 mPa·s. The relatively low viscosity of the main solvent results in a lower viscosity of the electrolyte with the localized high molar concentration and higher ionic conductivity.

In some embodiments, the main solvent may include at least one of ester solvent, ether solvent, sulfone solvent, nitrile solvent, amide solvent, and siloxane solvent.

In some embodiments, the ester solvent includes at least one of methyl formate, ethyl formate, ethyl acetate, dimethyl carbonate, ethyl methyl carbonate, diethyl carbonate, and propylene carbonate.

In some embodiments, the ether solvent includes at least one of C₄ to C₆ linear ether, C₃ to C₁₀ alkoxyalkane, C₃ to C₆ epoxyalkane, and trimethoxymethane.

In some embodiments, the sulfone solvent includes at least one of dimethyl sulfoxide, dimethyl sulfone, sulfolane, sulfoxide, methyl ethyl sulfone, and methyl ethyl sulfoxide.

In some embodiments, the nitrile solvent includes at least one of acetonitrile, propionitrile, butyronitrile, and malononitrile.

In some embodiments, the amide solvent includes at least one of dimethylformamide, dimethylacetamide, and diethylacetamide.

In some embodiments, the siloxane solvent includes at least one of dimethoxydimethylsilane and trimethoxymethylsilane.

In some embodiments, a relative molecular weight of the diluent is 60 to 190. When the molecular weight of the diluent is within the above range, the diluent is in a liquid state and helps further reduce the viscosity of the electrolyte. Moreover, due to the relatively small relative molecular weight of the diluent, its mass percentage is relatively small at the same substance amount, which is beneficial for increasing the mass percentage of the lithium salt in the solvation structure and improving the molar concentration of the lithium salt.

In some embodiments, the viscosity of the diluent is less than or equal to 5 mPa·s. The relatively low viscosity of the diluent results in a lower viscosity of the electrolyte and relatively high ionic conductivity.

In some embodiments, the diluent includes a compound represented by formula (C-I): 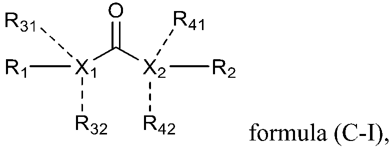 where
in formula (C-I),
X₁ and X₂ each independently include a carbon atom, an oxygen atom, or a nitrogen atom;
R₁ and R₂ each independently include a C₁ to C₆ chain alkyl group, a cycloalkyl group, an aryl group, a C₁ to C₆ chain haloalkyl group, a halocycloalkyl group, a haloaryl group, or a halogen atom;
R₃₁ and R₃₂ are absent or each independently include a hydrogen atom, a C₁ to C₆ chain alkyl group, a cycloalkyl group, an aryl group, a C₁ to C₆ chain haloalkyl group, a halocycloalkyl group, a haloaryl group, or a halogen atom, where
when X₁ is a carbon atom, R₃₁ and R₃₂ each independently include a hydrogen atom or a halogen atom;
when X₁ is an oxygen atom, R₃₁ and R₃₂ are absent; or
when X₁ is a nitrogen atom, one of R₃₁ and R₃₂ includes a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; and the other is absent; and
R₄₁ and R₄₂ are absent or each independently include a hydrogen atom, a C₁ to C₆ chain alkyl group, a cycloalkyl group, an aryl group, a C₁ to C₆ chain haloalkyl group, a halocycloalkyl group, a haloaryl group, or a halogen atom, where
when X₂ is a carbon atom, R₄₁ and R₄₂ each independently include a hydrogen atom or a halogen atom;
when X₂ is an oxygen atom, R₄₁ and R₄₂ are absent; or
when X₂ is a nitrogen atom, one of R₄₁ and R₄₂ includes a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; and the other is absent.

In some embodiments, the diluent includes a compound represented by formula (C-IIa): 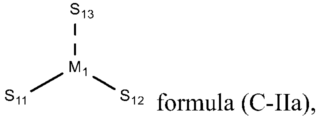 where
in formula (C-IIa),
M₁ includes an oxygen atom, a nitrogen atom, or a sulfur atom;
S₁₁ and S₁₂ each independently include a C₁ to C₆ chain alkyl group, a cycloalkyl group, an aryl group, a C₁ to C₆ chain haloalkyl group, a halocycloalkyl group, or a haloaryl group; and
S₁₃ is absent or includes a C₁ to C₆ chain alkyl group, a cycloalkyl group, an aryl group, a C₁ to C₆ chain haloalkyl group, a halocycloalkyl group, or a haloaryl group, where
when M₁ is an oxygen atom or a sulfur atom, S₁₃ is absent; or
when M₁ is a nitrogen atom, S₁₃ includes a C₁ to C₆ chain alkyl group, a cycloalkyl group, an aryl group, a C₁ to C₆ chain haloalkyl group, a halocycloalkyl group, or a haloaryl group.

In some embodiments, the diluent includes a compound represented by formula (C-IIb): 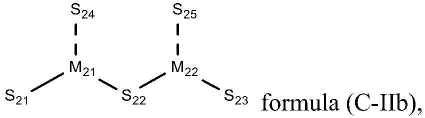 where
in formula (C-IIb),
M₂₁ and M₂₂ each independently include an oxygen atom, a nitrogen atom, or a sulfur atom;
S₂₁ and S₂₃ each independently include a C₁ to C₆ chain alkyl group, a cycloalkyl group, an aryl group, a C₁ to C₆ chain haloalkyl group, a halocycloalkyl group, or a haloaryl group;
S₂₂ includes an alkylene group or a haloalkylene group; and
S₂₄ is absent or includes a C₁ to C₆ chain alkyl group, a cycloalkyl group, an aryl group, a C₁ to C₆ chain haloalkyl group, a halocycloalkyl group, or a haloaryl group, where
when M₂₁ is an oxygen atom or a sulfur atom, S₂₄ is absent; or
when M₂₁ is a nitrogen atom, S₂₄ includes a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group.

In some embodiments, the diluent includes a compound represented by formula (C-IIc): 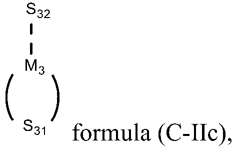 where
in formula (C-IIc),
M₃ includes at least one of an oxygen atom, a nitrogen atom, and a sulfur atom;
S₃₁ includes an alkylene group or a haloalkylene group; and
S₃₂ is absent or includes a C₁ to C₆ chain alkyl group, a cycloalkyl group, an aryl group, a C₁ to C₆ chain haloalkyl group, a halocycloalkyl group, or a haloaryl group, where
when M₃ is an oxygen atom or a sulfur atom, S₃₂ is absent; or
when M₃ is a nitrogen atom, S₃₂ includes a C₁ to C₆ chain alkyl group, a cycloalkyl group, an aryl group, a C₁ to C₆ chain haloalkyl group, a halocycloalkyl group, or a haloaryl group.

In some embodiments, the diluent includes a compound represented by formula (C-III):

CₘHₙQ_{y} formula (C-III),

where
in formula (C-III),
m is any positive integer selected from 1 to 8;
y is any integer selected from 0 to 10;
y/n is any value from 0.25 to 5; and
Q includes a halogen atom, where optionally, the halogen atom includes at least one of a fluorine atom and a chlorine atom.

In some embodiments, the diluent includes a compound represented by formula (C-IV): 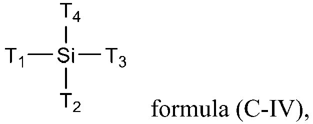 where
in formula (C-IV),
T₁ to T₄ each independently include a C₁ to C₆ chain alkyl group, a cycloalkyl group, an aryl group, an alkoxy group, a chain haloalkyl group, a halocycloalkyl group, a haloaryl group, or a haloalkoxy group.

In some embodiments, the diluent includes a compound represented by formula (C-V): 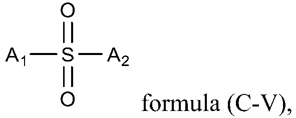 where
in formula (C-V),
A₁ includes a C₁ to C₃ alkyl group, a haloalkyl group, or a halogen atom; and
A₂ includes a C₁ to C₃ alkyl group, a haloalkyl group, an alkoxy group, a haloalkoxy group, N,N-dimethyl, N,N-diethyl, N,N-methylethyl, or a morpholinyl group.

In a second aspect of this application, a lithium metal battery is provided, including the electrolyte according to any embodiment of the first aspect of this application.

In some embodiments, the lithium metal battery includes a negative electrode plate, and the negative electrode plate includes a negative electrode current collector.

In some embodiments, the lithium metal battery includes a negative electrode plate; where the negative electrode plate includes a negative electrode current collector and a lithium metal layer disposed on at least one side of the negative electrode current collector.

In some embodiments, the lithium metal battery further includes a positive electrode plate, where the positive electrode plate includes a positive electrode current collector and a positive electrode film layer that is disposed on at least one side of the positive electrode current collector and that includes a positive electrode active material; and the positive electrode active material includes a compound represented by a general formula LiₓA_{y}NiₐCo_{b}Mn_{c}M_{(1-a-b-c)}Y_{z}, where 0 < x ≤ 2.1, 0 ≤ y ≤ 2.1, and 0.9 ≤ x + y ≤ 2.1; 0 ≤ a ≤ 1, 0 ≤ b ≤ 1, 0 ≤ c ≤ 1, and 0.1 ≤ a + b + c ≤ 1; 1.8 ≤ z ≤ 3.5; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. The above compound can enhance the energy density of the lithium metal battery, and when used in combination with the above electrolyte, the stability of the electrolyte on the positive electrode side is relatively high, which is beneficial for improving the cycling performance of the lithium metal battery.

In a third aspect of this application, a battery is provided, including the lithium metal battery according to any embodiment of the second aspect of this application.

In a fourth aspect of this application, an electric apparatus is provided, including the battery according to any embodiment of the third aspect of this application.

### BRIEF DESCRIPTION OF DRAWINGS

To more clearly illustrate the technical solutions of the embodiments of this application, the drawings required for use in the embodiments of this application are briefly introduced below. It is clear that the drawings described below are merely some embodiments of this application, and those of ordinary skill in the art can obtain other drawings based on these drawings without creative effort.
FIG. 1 is a schematic diagram of a lithium metal battery according to an embodiment of this application.
FIG. 2 is a schematic exploded view of the lithium metal battery shown in FIG. 1.
FIG. 3 is a schematic diagram of a battery module according to an embodiment of this application.
FIG. 4 is a schematic diagram of a battery pack according to an embodiment of this application.
FIG. 5 is a schematic exploded view of the battery pack shown in FIG. 4 according to an embodiment.
FIG. 6 is a schematic diagram of an electric apparatus including a lithium metal battery as a power source according to an embodiment of this application.

The drawings are not necessarily drawn to actual scale.

Description of reference signs:
1. battery pack; 2. upper case; 3. lower case; 4. battery module;
5. lithium metal battery; 51. housing; 52. electrode assembly;
53. cover plate; and
6. electric apparatus.

### DESCRIPTION OF EMBODIMENTS

Hereinafter, embodiments specifically disclosing an electrolyte for lithium metal battery, a lithium metal battery, a battery, and an electric apparatus of this application are described in detail with appropriate reference to the drawings. However, unnecessary detailed descriptions may be omitted. For example, detailed descriptions of well-known matters and repetitive descriptions of substantially identical structures may be omitted. This is to avoid unnecessarily lengthy descriptions and facilitate understanding by those skilled in the art. Additionally, the drawings and the following description are provided to enable those skilled in the art to fully understand this application and are not intended to limit the subject matter described in the claims.

A "range" disclosed in this application is defined in the form of lower and upper limits, and a given range is defined by a lower limit and an upper limit. The selected lower limit and upper limit define boundaries of a specific range. Ranges defined in this manner may include or exclude the endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents a shorthand representation for any combination of real numbers from a to b, where a and b are real numbers. For example, the numerical range "0-5" means that all real numbers between "0-5" are fully listed herein, and "0-5" is a shorthand representation of these numerical combinations. Additionally, when a parameter is expressed as an integer greater than or equal to 2, it is equivalent to disclosing that the parameter is, for example, the integer 2, 3, 4, 5, 6, 7, 8, 9, 10, 11, 12, or the like.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps of this application can be performed sequentially or randomly, preferably sequentially. For example, a method including steps (a) and (b) indicates that the method may include steps (a) and (b) performed sequentially, or steps (b) and (a) performed sequentially. For example, the method may further include step (c), indicating that step (c) can be added to the method in any position, for example, the method may include steps (a), (b), and (c), or steps (a), (c), and (b), or steps (c), (a), and (b), and the like.

Throughout this specification, substituents of compounds are disclosed in groups or ranges. It is explicitly contemplated that such descriptions include each individual sub-combination of the members of these groups and ranges. For example, the term "C₁-C₈ alkyl group" explicitly discloses C₁, C₂, C₃, C₄, C₅, C₆, C₇, C₈, C₁-C₈, C₁-C₇, C₁-C₆, C₁-C₅, C₁-C₄, C₁-C₃, C₁-C₂, C₂-C₈, C₂-C₇, C₂-C₆, C₂-C₅, C₂-C₄, C₂-C₃, C₃-C₈, C₃-C₇, C₃-C₆, C₃-C₅, C₃-C₄, C₄-C₈, C₄-C₇, C₄-C₆, C₄-C₅, C₅-C₈, C₅-C₇, C₅-C₆, C₆-C₈, C₆-C₇, and C₇-C₈ alkyl groups.

As another example, a range of integers from 5 to 40 explicitly discloses 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40; a range of integers from 1 to 20 explicitly discloses 1, 2, 3, 4, 5, 6, 7, 8, 9, 10, 11, 12, 13, 14, 15, 16, 17, 18, 19, and 20. Accordingly, other groups or ranges can be explicitly contemplated.

Due to a high specific capacity, lithium metal can significantly enhance an energy density of battery cells, making lithium metal batteries promising for broad applications. A lithium metal battery includes an electrode assembly and an electrolyte. The electrode assembly includes a positive electrode plate, a negative electrode plate, and a separator. The separator is positioned between the positive and negative electrode plates to isolate the positive and negative electrode plates. Lithium metal batteries store and discharge energy through the stripping and deposition of lithium metal. Specifically, during the charge process of a lithium metal battery, lithium ions deintercalate from a positive electrode active material of a positive electrode plate, pass through the separator via the electrolyte, desolvate from solvent molecules, pass through the solid electrolyte interface (Solid Electrolyte Interface, SEI) film, and deposit as lithium metal on a surface of the negative electrode plate, thereby generating a current due to a molar concentration difference in an external circuit. During the discharge of the lithium metal battery, the lithium metal on the surface of the negative electrode plate loses electrons to the external circuit, forming lithium ions that are released into the electrolyte, and after solvation, migrate via the electrolyte to the positive electrode active material.

Due to the high reactivity of lithium metal, the interface stability between the surface of the negative electrode plate and the electrolyte in lithium metal batteries is poor, making the electrolyte prone to decomposition on the surface of the negative electrode plate, which deteriorates the performance of lithium metal batteries.

In related technologies, electrolytes with high localized molar concentration are used to improve the performance of lithium metal batteries. However, these electrolytes with high localized molar concentration may still lead to failure during cycling. The failure mechanism is primarily due to two reasons. First, a lithium salt continuously decomposes to form a film during cycling, leading to a continuous decrease in the molar concentration of the lithium salt in the electrolyte, resulting in a continuous reduction in ionic conductivity. When a certain threshold is reached, the polarization of the lithium metal battery becomes excessive, leading to a capacity drop. Second, after cycling of the electrolyte, the SEI film components on the surface of the negative electrode plate of the lithium metal battery accumulate and form a byproduct layer with a thickness of up to tens of micrometers. Although a diluent is added to the electrolyte, the viscosity of the electrolyte remains high, and therefore infiltration of the electrolyte into the electrode plate is poor, leading to excessive polarization of the lithium metal battery and triggering a capacity drop.

Based on the above failure mechanism, the embodiments of this application improve the composition of the electrolyte. By selecting specific organic solvents and lithium salts, the molar concentration of the lithium salt in the electrolyte is relatively high, forming an anion-coordination-dominated solvation structure, so that a certain lithium salt molar concentration is maintained in the later stage of cycling. Additionally, the viscosity of the electrolyte is relatively low, and the ionic conductivity is relatively high, effectively reducing the polarization of the lithium metal battery and enhancing the cycling performance of the lithium metal battery.

### Electrolyte

In a first aspect, the embodiments of this application propose an electrolyte. This electrolyte may be used in lithium metal batteries.

The electrolyte includes a main solvent, a diluent, and a lithium salt, where a molar concentration of the lithium salt is 1 mol/L to 4 mol/L, and a viscosity of the electrolyte is less than or equal to 5.5 mPa·s.

In the embodiments of this application, the molar concentration of the lithium salt in the electrolyte is relatively high, for example, 1 mol/L to 4 mol/L, enabling the lithium salt to form a solvation structure with the main solvent, so that a certain molar concentration of the lithium salt is maintained even in the later stage of cycling. Additionally, since the electrolyte further includes the diluent, the viscosity of the electrolyte is relatively low, and the ionic conductivity is relatively high, effectively reducing polarization growth in the lithium metal battery and enhancing cycling performance of the lithium metal battery.

Specifically,
The main solvent, as the main solvent in the electrolyte, has a high solubility for the lithium salt, dissociating the lithium salt into cations and anions, and cations and anions form a solvation structure with the main solvent. In other words, the solvation structure includes the lithium salt and the main solvent, and a structural form of the solvation structure includes contact ion pairs (one anion coordinates with one cation and the main solvent) and aggregates (one anion coordinates with two or more cations and the main solvent). When the solvation structure contacts the surface of the negative electrode plate of the lithium metal battery, the anions in the solvation structure decompose preferentially over the main solvent to participate in film-forming reactions, improving the coulombic efficiency of the lithium metal battery.

The solubility of the lithium salt in the diluent is low, or the lithium salt is substantially insoluble in the diluent, for example, the solubility of the lithium salt in the diluent is less than or equal to 0.1 g/100 g. The diluent can reduce a content of the lithium salt per unit volume of the electrolyte. The diluent and the solvation structure exist in a form similar to a mixture, and both the diluent and the solvation structure can contact the positive and negative electrodes, facilitating the infiltration of the electrolyte into the electrode plates and the transmission of lithium ions. Due to the poor solubility and dissociation of the diluent for the lithium salt, the diluent substantially does not participate in the construction of the solvation structure, so the introduction of the diluent has minimal impact on a coordination structure formed by the lithium salt and the main solvent. This results in a locally high molar concentration of the lithium salt, providing sufficient lithium ions for the battery system during cyclic charge and discharge, enabling lithium ions to migrate between the positive and negative electrodes, reducing polarization in the lithium metal battery. Moreover, as an inert component, the diluent can significantly reduce the viscosity of the electrolyte, so that the viscosity of the electrolyte is less than or equal to 5.5 mPa·s, improving the infiltration of the electrolyte into the electrode plates, further reducing polarization growth in the lithium metal battery, and enhancing the ionic conductivity of the electrolyte, thereby improving the cycling performance of the lithium metal battery.

In the embodiments of this application, a specific structure of the solvation structure containing lithium ions in the electrolyte may be analyzed using Raman spectroscopy. For example, in an argon glove box (oxygen concentration is less than 0.1 ppm, and water content is less than 0.1 ppm), an electrolyte is taken as a sample and is drawn into a glass capillary with a diameter of 0.3 mm, with both ends of the glass capillary sealed with molten paraffin. After the paraffin solidifies, the glass capillary forms a sealed space, isolating it from air. The glass capillary is then fixed to a glass slide with tape for testing, with a test range of 100 cm⁻¹ to 3000 cm⁻¹, using a normal scan mode and a laser wavelength of 785 nm to minimize fluorescence interference. In the embodiments of this application, the specific structure of the solvation structure in the electrolyte may alternatively be detected using nuclear magnetic resonance (NMR).

Optionally, with the main solvent as a solute and the diluent as a solvent for testing, a solubility of the main solvent in the diluent is greater than or equal to 10 g/100 g, indicating a relatively high solubility of the main solvent in the diluent; and the two may even be miscible. After the introduction of the diluent into the electrolyte, since the main solvent participates in the construction of the solvation structure, the diluent and the solvation structure may exist in a form similar to a mixture.

In some embodiments, the viscosity of the electrolyte is less than or equal to 5.5 mPa·s; optionally, the viscosity of the electrolyte is less than or equal to 5.1 mPa·s; optionally, the viscosity of the electrolyte is less than or equal to 4 mPa·s. The relatively low viscosity of the electrolyte system facilitates reduced polarization and enhances the cycling performance of the lithium metal battery.

For example, the viscosity of the electrolyte may be 0.1 mPa·s, 0.2 mPa·s, 0.3 mPa·s, 0.5 mPa·s, 0.6 mPa·s, 0.8 mPa·s, 1 mPa·s, 1.2 mPa·s, 1.5 mPa·s, 1.6 mPa·s, 1.8 mPa·s, 2 mPa·s, 2.2 mPa·s, 2.5 mPa·s, 2.8 mPa·s, 3 mPa·s, 3.2 mPa·s, 3.5 mPa·s, 3.8 mPa·s, 4 mPa·s, 4.2 mPa·s, 4.5 mPa·s, 4.8 mPa·s, 5 mPa·s, 5.1 mPa·s, 5.2 mPa·s, 5.3 mPa·s, 5.4 mPa·s, 5.5 mPa·s, or a range defined by any two of the above values.

In some embodiments, the ionic conductivity of the electrolyte is 2 mS/cm to 5 mS/cm; optionally, from 3 mS/cm to 5 mS/cm. When the ionic conductivity of the electrolyte is within the above range, it is beneficial for enhancing the cycling performance of the lithium metal battery.

For example, the ionic conductivity of the electrolyte may be 2 mS/cm, 2.5 mS/cm, 3 mS/cm, 3.5 mS/cm, 4 mS/cm, 4.5 mS/cm, 5 mS/cm, or a range defined by any two of the above values.

### [Lithium salt]

In some embodiments, the molar concentration of the lithium salt is 1 mol/L to 4 mol/L; optionally, 1.5 mol/L to 4 mol/L; optionally, 2 mol/L to 4 mol/L; further optionally, 2 mol/L to 3.5 mol/L. When the molar concentration of the lithium salt is within the above range, it can form, with the main solvent, a solvation structure having a high molar concentration. Although there is some loss of lithium salt during the cycling of the lithium metal battery, due to the relatively high molar concentration of the lithium salt, a certain concentration of lithium salt is maintained in the later stage of cycling of the lithium metal battery, reducing polarization growth and achieving long-term stable cycling of the lithium metal battery. In the embodiments of this application, the molar concentration of the lithium salt refers to the molar concentration of the lithium salt in the electrolyte.

For example, the molar concentration of the lithium salt may be 1 mol/L, 1.1 mol/L, 1.15 mol/L, 1.2 mol/L, 1.25 mol/L, 1.3 mol/L, 1.35 mol/L, 1.4 mol/L, 1.45 mol/L, 1.5 mol/L, 1.55 mol/L, 1.6 mol/L, 1.65 mol/L, 1.7 mol/L, 1.75 mol/L, 1.8 mol/L, 1.85 mol/L, 1.9 mol/L, 1.95 mol/L, 2 mol/L, 2.1 mol/L, 2.15 mol/L, 2.20 mol/L, 2.25 mol/L, 2.30 mol/L, 2.35 mol/L, 2.40 mol/L, 2.45 mol/L, 2.5 mol/L, 2.55 mol/L, 2.6 mol/L, 2.65 mol/L, 2.7 mol/L, 2.75 mol/L, 2.8 mol/L, 2.9 mol/L, 3 mol/L, 3.1 mol/L, 3.2 mol/L, 3.25 mol/L, 3.3 mol/L, 3.4 mol/L, 3.5 mol/L, 3.6 mol/L, 3.75 mol/L, 3.8 mol/L, 3.85 mol/L, 3.9 mol/L, 3.95 mol/L, 4 mol/L, or a range defined by any two of the above values.

In some embodiments, the lithium salt includes at least one of a fluorine-containing lithium salt, lithium bis(oxalate)borate (LiBOB), and lithium perchlorate.

In some embodiments, the fluorine-containing lithium salt includes at least one of a fluorine-containing sulfonimide lithium salt, a fluorine-containing phosphate lithium salt, a fluorine-containing borate lithium salt, a fluorine-containing oxalate phosphate lithium salt, lithium hexafluoroarsenate (LiAsF₆), lithium trifluoromethanesulfonate (LiOTF), and lithium difluoro(oxalate)borate (LiDFOB). Optionally, the fluorine-containing lithium salt includes a fluorine-containing sulfonimide lithium salt.

In some embodiments, the fluorine-containing sulfonimide lithium salt includes at least one of lithium bis(fluorosulfonyl)imide (LiFSI) and lithium bis(trifluoromethanesulfonyl)imide (LiTFSI). Further optionally, the fluorine-containing lithium salt includes lithium bis(fluorosulfonyl)imide (LiFSI).

In some embodiments, the fluorine-containing phosphate lithium salt includes at least one of lithium hexafluorophosphate (LiPF₆) and lithium difluorophosphate (LiDFP).

In some embodiments, the fluorine-containing borate lithium salt includes at least one of lithium tetrafluoroborate (LiBF₄) and lithium difluoroborate.

In some embodiments, the fluorine-containing oxalate phosphate lithium salt includes at least one of lithium difluoro(oxalate)phosphate and lithium tetrafluoro(oxalate)phosphate.

The above lithium salts, in combination with the main solvent, enable the dissolution of lithium salts with high molar concentrations in the main solvent and, in cooperation with the diluent, form a solvation structure with a localized high molar concentration.

Optionally, the lithium salt may include at least one of lithium bis(fluorosulfonyl)imide (LiFSI) and lithium bis(trifluoromethanesulfonyl)imide (LiTFSI); further optionally, the lithium salt may include lithium bis(fluorosulfonyl)imide (LiFSI). The above lithium salts have relatively high solubility in the main solvent and can decompose preferentially over an organic solvent on the surface of the negative electrode plate to form inorganic fluorine-rich SEI components, facilitating long-term cycling of the lithium metal battery. Additionally, the above lithium salts have relatively good oxidative stability, supporting cycling under high voltage.

### [Main solvent]

The lithium salt has excellent solubility in the main solvent, facilitating coordination between the lithium salt and the main solvent to form a solvation structure and promoting the decomposition of the lithium salt on the surface of the negative electrode plate to form a film.

In some embodiments, the molar concentration of the lithium salt in the main solvent is greater than or equal to 4 mol/L. The main solvent has strong solubility and dissociation for the lithium salt, resulting in a relatively high concentration of lithium salt in the solvation structure. For example, the molar concentration of the lithium salt in the main solvent may be 4 mol/L, 4.5 mol/L, 5 mol/L, 5.5 mol/L, 6 mol/L, 6.5 mol/L, 7 mol/L, 7.5 mol/L, 8 mol/L, or a range defined by any two of the above values. In the embodiments of this application, the molar concentration of the lithium salt in the main solvent refers to the concentration data detected when the lithium salt is dissolved as a solute in the main solvent.

In some embodiments, the viscosity of the main solvent is less than or equal to 5 mPa·s. The relatively low viscosity of the main solvent results in a lower viscosity of the electrolyte with the localized high molar concentration and higher ionic conductivity. For example, the viscosity of the main solvent may be 0.1 mPa·s, 0.2 mPa·s, 0.3 mPa·s, 0.5 mPa·s, 0.6 mPa·s, 0.8 mPa·s, 1 mPa·s, 1.2 mPa·s, 1.5 mPa·s, 1.6 mPa·s, 1.8 mPa·s, 2 mPa·s, 2.2 mPa·s, 2.5 mPa·s, 2.8 mPa·s, 3 mPa·s, 3.2 mPa·s, 3.5 mPa·s, 3.8 mPa·s, 4 mPa·s, 4.2 mPa·s, 4.5 mPa·s, 4.8 mPa·s, 5 mPa·s, or a range defined by any two of the above values.

In some embodiments, a relative molecular weight of the main solvent is 40 to 150; optionally, 40 to 125. When the relative molecular weight of the main solvent is within the above range, the main solvent is in a liquid state, and its viscosity is not excessively high, facilitating the formation of the solvation structure with the lithium salt. Due to the relatively small relative molecular weight range of the main solvent, the main solvent does not have a higher mass percentage at the same molar fraction, and even if a material of the main solvent is adjusted, the mass percentage of the main solvent remains relatively small, which is beneficial for increasing a mass percentage of the lithium salt. For example, the relative molecular weight of the main solvent may be 40, 42, 45, 50, 55, 60, 65, 70, 75, 80, 85, 90, 95, 100, 105, 110, 115, 120, 125, 130, 135, 140, 145, 150, or a range defined by any two of the above values.

In some embodiments, based on a total mass of the main solvent and the diluent in the electrolyte, the mass percentage of the main solvent is 10% to 80%; optionally, 20% to 40%; optionally, 30% to 40%. When the mass percentage of the main solvent is within the above range, the solvent molecules of the main solvent can participate in the construction of the solvation structure, with substantially no free main solvent molecules.

For example, the mass percentage of the main solvent may be 10%, 15%, 20%, 25%, 30%, 35%, 40%, 45%, 50%, 55%, 60%, 65%, 70%, 75%, 80%, or a range defined by any two of the above values.

In some embodiments, the main solvent may include at least one of ester solvent, ether solvent, sulfone solvent, nitrile solvent, amide solvent, and siloxane solvent.

In some embodiments, the ester solvent includes at least one of methyl formate, ethyl formate, ethyl acetate, dimethyl carbonate, ethyl methyl carbonate, diethyl carbonate, and propylene carbonate.

In some embodiments, the ether solvent includes at least one of C₄ to C₆ linear ether, C₃ to C₁₀ alkoxyalkane, C₃ to C₆ epoxyalkane, and trimethoxymethane. The ether solvent has good resistance to reduction and is not prone to decomposition. Moreover, the ether solvent has excellent solubility for lithium salt, facilitating the construction of a solvation structure with localized high molar concentration by increasing the molar concentration of the lithium salt. Additionally, since the anions of the lithium salt dominate in this solvation structure, the preferential decomposition of anions into inorganic SEI films is facilitated. Furthermore, the electrolyte has low viscosity and excellent ionic conductivity.

For example, C₄ to C₆ linear ether includes at least one of diethyl ether, methyl propyl ether, dipropyl ether, methyl butyl ether, and ethyl propyl ether.

For example, C₃ to C₁₀ alkoxyalkane includes at least one of C₃ to C₁₀ dimethoxyalkane, C₃ to C₁₀ diethoxyalkane, C₃ to C₁₀ methoxyethoxyalkane, C₃ to C₁₀ methoxypropoxyalkane, C₃ to C₁₀ methoxybutoxyalkane, and C₃ to C₁₀ ethoxypropoxyalkane.

For example, C₃ to C₁₀ dimethoxyalkane includes at least one of dimethoxymethane, 1,1-dimethoxyethane, 1,1-dimethoxypropane, 2,2-dimethoxypropane, 1,1-dimethoxy-n-butane, 2,2-dimethoxy-n-butane, 1,1-dimethoxyisobutane, 1,2-dimethoxyethane, 1,3-dimethoxypropane (DMP), 1,2-dimethoxypropane, 1,4-dimethoxy-n-butane, 1,3-dimethoxy-n-butane, 1,2-dimethoxy-n-butane, 1,2-dimethoxyisobutane, and 1,3-dimethoxyisobutane. Optionally, C₃ to C₁₀ dimethoxyalkane includes 1,3-dimethoxypropane (DMP).

For example, C₃ to C₁₀ diethoxyalkane includes at least one of diethoxymethane, 1,1-diethoxyethane, and 1,2-diethoxyethane (DME). Optionally, C₃ to C₁₀ diethoxyalkane includes 1,2-diethoxyethane (DME).

For example, C₃ to C₁₀ methoxyethoxyalkane includes at least one of 1-methoxy-1-ethoxymethane, 1-methoxy-1-ethoxyethane, 1-methoxy-1-ethoxypropane, 1-methoxy-2-ethoxyethane, 1-methoxy-2-ethoxypropane, and 1-methoxy-3-ethoxypropane.

For example, C₃ to C₁₀ methoxypropoxyalkane includes 1-methoxy-1-propoxymethane.

For example, C₃ to C₁₀ methoxybutoxyalkane includes 1-methoxy-2-butoxymethane.

For example, C₃ to C₁₀ ethoxypropoxyalkane includes 1-ethoxy-1-propoxymethane.

For example, C₃ to C₆ epoxyalkane includes at least one of tetrahydrofuran, tetrahydropyran, 1,3-dioxolane, 1,3-dioxane, and 1,4-dioxane.

In some embodiments, the sulfone solvent includes at least one of dimethyl sulfoxide, dimethyl sulfone, sulfolane, sulfoxide, methyl ethyl sulfone, and methyl ethyl sulfoxide.

In some embodiments, the nitrile solvent includes at least one of acetonitrile, propionitrile, butyronitrile, and malononitrile.

In some embodiments, the amide solvent includes at least one of dimethylformamide, dimethylacetamide, and diethylacetamide.

In some embodiments, the siloxane solvent includes at least one of dimethoxydimethylsilane and trimethoxymethylsilane.

### [Diluent]

As an inert diluent, the diluent can reduce the viscosity of the electrolyte. Moreover, its low solubility for the lithium salt has minimal impact on the solvation structure in the electrolyte, allowing the solvation structure to fully facilitate preferential anion film formation.

In some embodiments, the viscosity of the diluent is less than or equal to 5 mPa·s; optionally, less than or equal to 3 mPa·s. The relatively low viscosity of the diluent results in a lower viscosity of the electrolyte and relatively high ionic conductivity. For example, the viscosity of the diluent may be 0.1 mPa·s, 0.2 mPa·s, 0.3 mPa·s, 0.5 mPa·s, 0.6 mPa·s, 0.8 mPa·s, 1 mPa·s, 1.2 mPa·s, 1.5 mPa·s, 1.6 mPa·s, 1.8 mPa·s, 2 mPa·s, 2.2 mPa·s, 2.5 mPa·s, 2.8 mPa·s, 3 mPa·s, 3.2 mPa·s, 3.5 mPa·s, 3.8 mPa·s, 4 mPa·s, 4.2 mPa·s, 4.5 mPa·s, 4.8 mPa·s, 5 mPa·s, or a range defined by any two of the above values.

In some embodiments, a relative molecular weight of the diluent is 60 to 190. When the molecular weight of the diluent is within the above range, the diluent is in a liquid state and helps further reduce the viscosity of the electrolyte. Moreover, due to the relatively small relative molecular weight of the diluent, its mass percentage is relatively small at the same substance amount, which is beneficial for increasing the mass percentage of the lithium salt in the solvation structure and improving the molar concentration of the lithium salt. For example, the relative molecular weight of the diluent may be 60, 65, 70, 75, 80, 85, 90, 95, 100, 105, 110, 115, 120, 125, 130, 135, 140, 145, 150, 155, 160, 165, 170, 175, 180, 185, 190, or a range defined by any two of the above values.

When a substance amount of the diluent and a substance amount of the lithium salt are within a set range, the diluent has minimal impact on the solvation structure. While reducing the viscosity of the electrolyte system, the electrolyte still maintains the solvation structure, allowing the lithium salt in the solvation structure to preferentially form a film, improving the performance of the SEI film and reducing the risk of capacity drop in the lithium metal battery. Due to the relatively small relative molecular weight range of the diluent, the diluent does not have a higher mass percentage at the same molar fraction, and even if the material of the diluent is adjusted, the mass percentage of the diluent remains relatively small, which is beneficial for increasing the mass percentage of the lithium salt. In some embodiments, based on a total mass of the main solvent and the diluent in the electrolyte, the mass percentage of the diluent is 20% to 90%; optionally, 60% to 80%; optionally, 60% to 70%. When the mass percentage of the diluent is within the above range, the substance amount of the diluent and the substance amount of the lithium salt can satisfy a set range, and the diluent has substantially no effect on the solvation structure, allowing the lithium salt to preferentially form a film in the solvation structure, improving the performance of the SEI film and reducing the risk of capacity drop in the lithium metal battery. For example, the mass percentage of the diluent may be 20%, 25%, 30%, 35%, 40%, 45%, 50%, 55%, 60%, 65%, 70%, 75%, 80%, 85%, 90%, or a range defined by any two of the above values.

In some embodiments, the diluent includes a compound represented by formula (C-I): 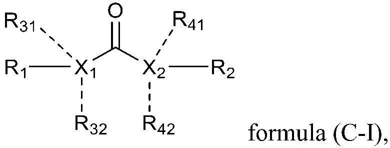 where
in formula (C-I),
X₁ and X₂ each independently include a carbon atom, an oxygen atom, or a nitrogen atom;
R₁ and R₂ each independently include a C₁ to C₆ chain alkyl group, a cycloalkyl group, an aryl group, a C₁ to C₆ chain haloalkyl group, a halocycloalkyl group, a haloaryl group, or a halogen atom; and optionally, the halogen atom includes a fluorine atom or a chlorine atom;
R₃₁ and R₃₂ are absent or each independently include a hydrogen atom, a C₁ to C₆ chain alkyl group, a cycloalkyl group, an aryl group, a C₁ to C₆ chain haloalkyl group, a halocycloalkyl group, a haloaryl group, or a halogen atom, where
when X₁ is a carbon atom, R₃₁ and R₃₂ each independently include a hydrogen atom or a halogen atom;
when X₁ is an oxygen atom, R₃₁ and R₃₂ are absent; or
when X₁ is a nitrogen atom, one of R₃₁ and R₃₂ includes a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; and the other is absent; and
R₄₁ and R₄₂ are absent or each independently include a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; where
when X₂ is a carbon atom, R₄₁ and R₄₂ each independently include a hydrogen atom or a halogen atom;
when X₂ is an oxygen atom, R₄₁ and R₄₂ are absent; or
when X₂ is a nitrogen atom, one of R₄₁ and R₄₂ includes a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; and the other is absent.

Optionally, R₁ and R₂ each independently include a C₁ to C₆ chain alkyl group, a C₁ to C₆ chain haloalkyl group, or a halogen atom.

Optionally, R₃₁ and R₃₂ are absent or each independently include a hydrogen atom, a C₁ to C₆ chain alkyl group, a C₁ to C₆ chain haloalkyl group, or a halogen atom.

Optionally, R₄₁ and R₄₂ are absent or each independently include a hydrogen atom, a C₁ to C₆ chain alkyl group, a C₁ to C₆ chain haloalkyl group, or a halogen atom.

In some embodiments, when X₁ and X₂ are both carbon atoms, the compound represented by formula (C-I) is a ketone compound.

In some embodiments, when X₁ and X₂ are both oxygen atoms, the compound represented by formula (C-I) is a carbonate compound.

In some embodiments, when X₁ and X₂ are both nitrogen atoms, the compound represented by formula (C-I) is a urea compound.

In some embodiments, when one of X₁ and X₂ is a carbon atom and the other is an oxygen atom, the compound represented by formula (C-I) is a carboxylate compound.

In some embodiments, when one of X₁ and X₂ is a carbon atom and the other is a nitrogen atom, the compound represented by formula (C-I) is an amide compound.

In some embodiments, when one of X₁ and X₂ is an oxygen atom and the other is a nitrogen atom, the compound represented by formula (C-I) is a carbamate compound.

For example, the compound represented by formula (C-I) includes at least one of compounds represented by formulas (C-I-1) to (C-I-32).

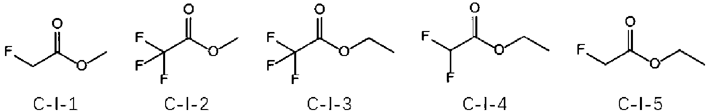

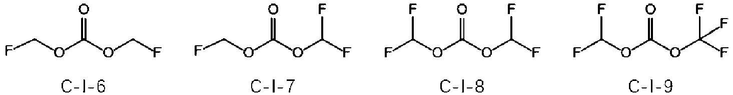

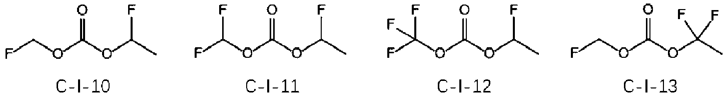

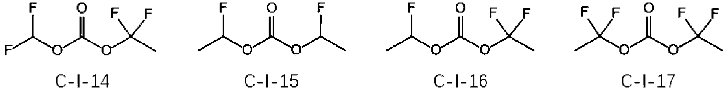

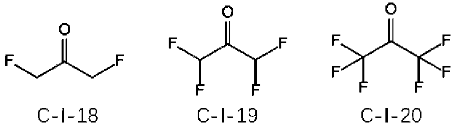

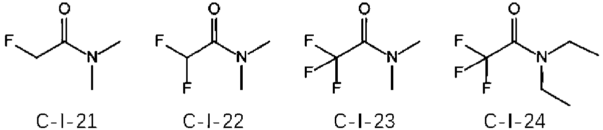

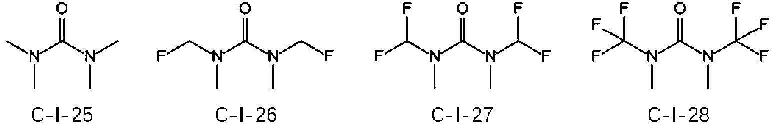

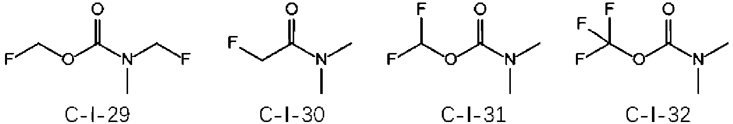

In some embodiments, the diluent includes a compound represented by formula (C-IIa): 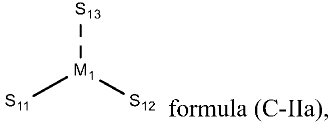 where
in formula (C-IIa),
M₁ includes an oxygen atom, a nitrogen atom, or a sulfur atom;
S₁₁ and S₁₂ each independently include a C₁ to C₆ chain alkyl group, a cycloalkyl group, an aryl group, a C₁ to C₆ chain haloalkyl group, a halocycloalkyl group, or a haloaryl group; optionally, S₁₁ and S₁₂ each independently include a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group; and
S₁₃ is absent or includes a C₁ to C₆ chain alkyl group, a cycloalkyl group, an aryl group, a C₁ to C₆ chain haloalkyl group, a halocycloalkyl group, a haloaryl group, where
when M₁ is an oxygen atom or a sulfur atom, S₁₃ is absent; or
when M₁ is a nitrogen atom, S₁₃ includes a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group.

Optionally, S₁₃ is absent or includes a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group.

For example, the compound represented by formula (C-II) includes at least one of compounds represented by formulas (C-11-1) to (C-11-12).

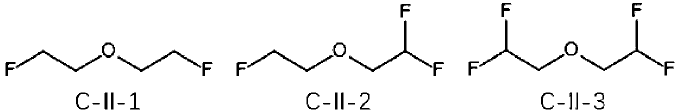

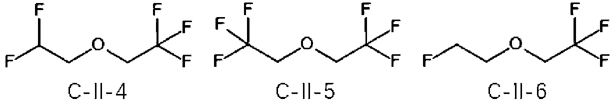

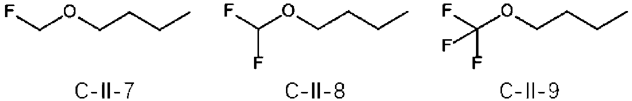

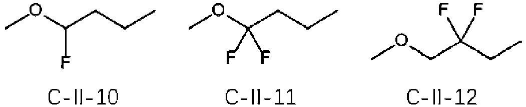

For example, the compound represented by formula (C-II) includes at least one of compounds represented by formulas (C-11-31) to (C-II-34).

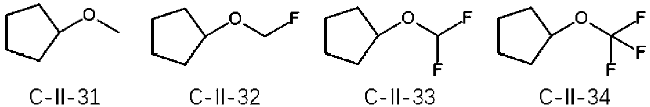

For example, the compound represented by formula (C-II) includes at least one of compounds represented by formulas (C-II-39) to (C-II-42).

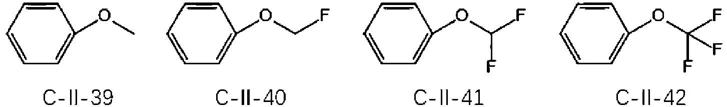

For example, the compound represented by formula (C-II) includes a compound represented by formula (C-II-68).

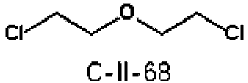

In some embodiments, the diluent includes a compound represented by formula (C-IIb): 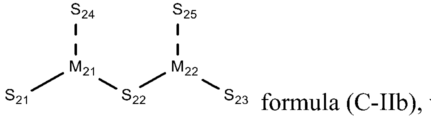 where
in formula (C-IIb),
M₂₁ and M₂₂ each independently include an oxygen atom, a nitrogen atom, or a sulfur atom;
S₂₁ and S₂₃ each independently include a C₁ to C₆ chain alkyl group, a cycloalkyl group, an aryl group, a C₁ to C₆ chain haloalkyl group, a halocycloalkyl group, or a haloaryl group; optionally, S₂₁ and S₂₃ each independently include a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group;
S₂₂ includes an alkylene group or a haloalkylene group; optionally, a C₁ to C₄ alkylene group or a C₁ to C₄ haloalkylene group; and
S₂₄ is absent or includes a C₁ to C₆ chain alkyl group, a cycloalkyl group, an aryl group, a C₁ to C₆ chain haloalkyl group, a halocycloalkyl group, a haloaryl group, where
when M₂₁ is an oxygen atom or a sulfur atom, S₂₄ is absent; or
when M₂₁ is a nitrogen atom, S₂₄ includes a C₁ to C₆ chain alkyl group, a cycloalkyl group, an aryl group, a C₁ to C₆ chain haloalkyl group, a halocycloalkyl group, or a haloaryl group.

Optionally, S₂₄ is absent or includes a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group; and
S₂₅ is absent or includes a C₁ to C₆ chain alkyl group, a cycloalkyl group, an aryl group, a C₁ to C₆ chain haloalkyl group, a halocycloalkyl group, or a haloaryl group, where
when M₂₂ is an oxygen atom or a sulfur atom, S₂₅ is absent; and
when M₂₂ is a nitrogen atom, S₂₅ includes a C₁ to C₆ chain alkyl group, a cycloalkyl group, an aryl group, a C₁ to C₆ chain haloalkyl group, a halocycloalkyl group, or a haloaryl group.

Optionally, S₂₅ is absent or includes a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group.

For example, the compound represented by formula (C-II) includes at least one of compounds represented by formulas (C-II-13) to (C-II-30).

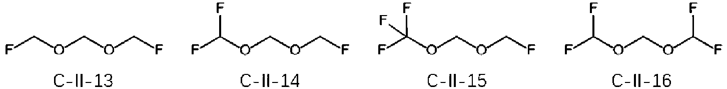

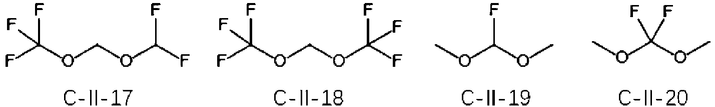

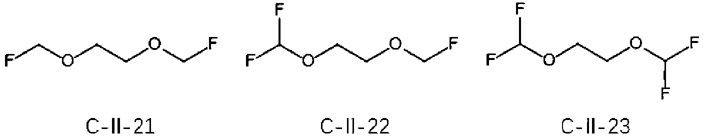

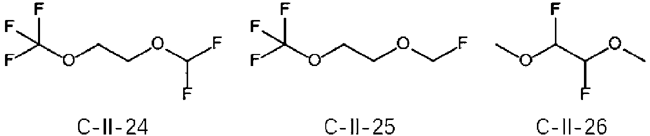

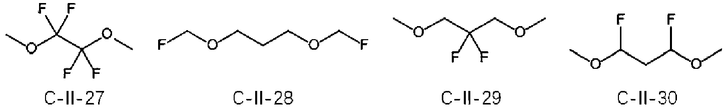

For example, the compound represented by formula (C-II) includes at least one of compounds represented by formulas (C-II-69) to (C-II-74).

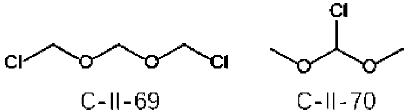

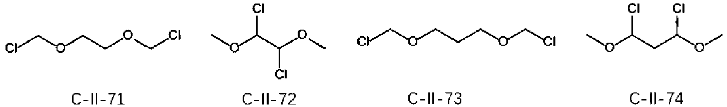

For example, the compound represented by formula (C-II) includes at least one of compounds represented by formulas (C-II-75) to (C-II-77).

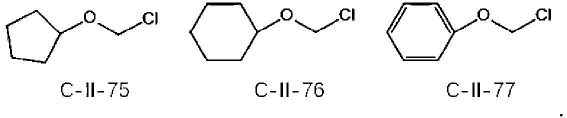

In some embodiments, the diluent includes a compound represented by formula (C-IIc): 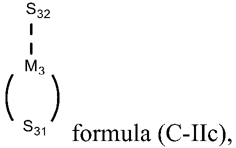 where
in formula (C-IIc),
M₃ includes at least one of an oxygen atom, a nitrogen atom, and a sulfur atom;
S₃₁ includes an alkylene group or a haloalkylene group; optionally, a C₁ to C₄ alkylene group or a C₁ to C₄ haloalkylene group; and
S₃₂ is absent or includes a C₁ to C₆ chain alkyl group, a cycloalkyl group, an aryl group, a C₁ to C₆ chain haloalkyl group, a halocycloalkyl group, or a haloaryl group; where
when M₃ is an oxygen atom or a sulfur atom, S₃₂ is absent; or
when M₃ is a nitrogen atom, S₃₂ includes a C₁ to C₆ chain alkyl group, a cycloalkyl group, an aryl group, a C₁ to C₆ chain haloalkyl group, a halocycloalkyl group, or a haloaryl group.

For example, the compound represented by formula (C-II) includes at least one of compounds represented by formulas (C-II-43) to (C-II-67).

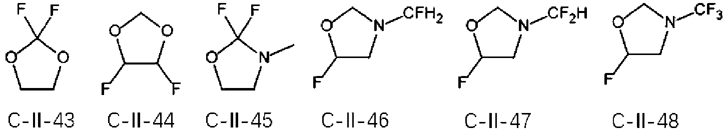

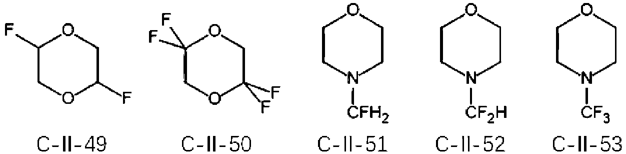

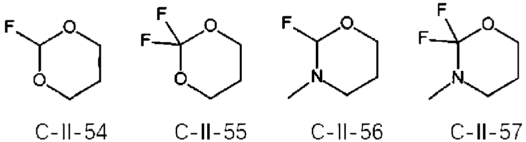

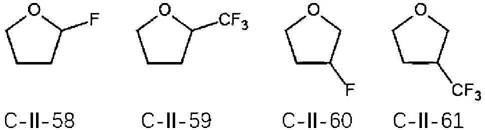

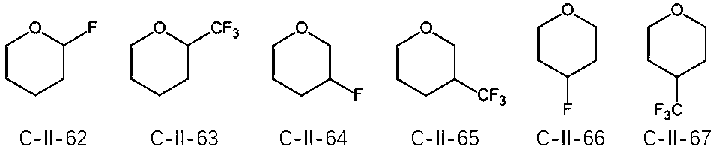

For example, the compound represented by formula (C-II) includes at least one of compounds represented by formulas (C-II-78) to (C-II-85).

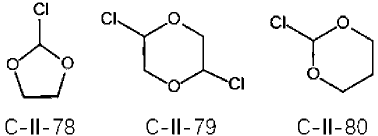

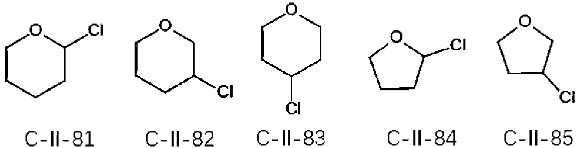

Optionally, the diluent may include at least one of the compounds represented by formulas (C-II-3), (C-II-4), (C-II-21), (C-II-32), and (C-II-30). These compounds have relatively low molecular weights and low viscosity. Moreover, these compounds have relatively high boiling points, exhibiting high thermal stability at the relatively high operating temperatures of lithium metal batteries, which is beneficial for improving the thermal stability of the electrolyte at high temperatures.

In some embodiments, the diluent includes a compound represented by formula (C-III):

CₘHₙQ_{y} formula (C-III),

where
in formula (C-III),
m is any positive integer selected from 1 to 8;
y is any integer selected from 0 to 10;
y/n is any value from 0.25 to 5; and
Q includes a halogen atom, where optionally, the halogen atom includes at least one of a fluorine atom and a chlorine atom.

For example, the compound represented by formula (C-III) may include at least one of alkane, haloalkane, alkene, haloalkene, cycloalkane, halocycloalkane, aromatic hydrocarbon, and haloaromatic hydrocarbon; further optionally, the compound represented by formula (C-III) may include at least one of alkane, haloalkane, haloalkene, cycloalkane, aromatic hydrocarbon, and haloaromatic hydrocarbon. For example, the compound represented by formula (C-III) may include at least one of C₁ to C₆ alkane, C₁ to C₆ haloalkane, C₂ to C₆ alkene, C₂ to C₆ haloalkene, C₃ to C₆ cycloalkane, C₃ to C₆ halocycloalkane, C₆ to C₈ aromatic hydrocarbon, and C₆ to C₈ haloaromatic hydrocarbon.

For example, the compound represented by formula (C-III) may include at least one of compounds represented by formulas (C-III-1) to (C-III-10) and compounds represented by formulas (C-III-13) to (C-III-21).

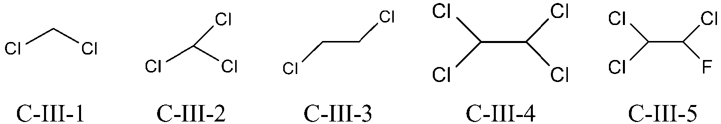

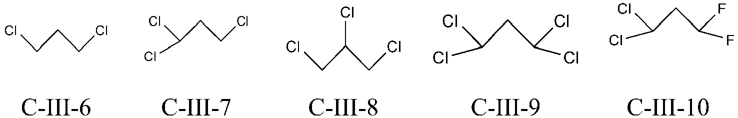

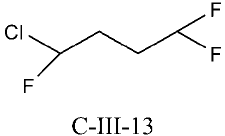

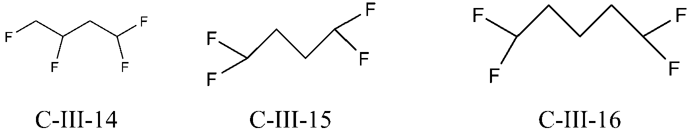

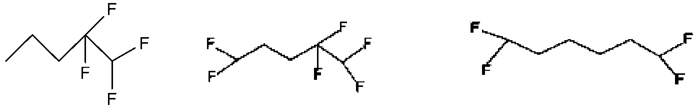

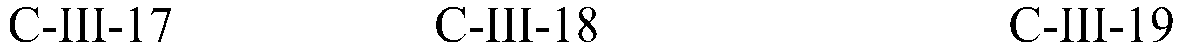

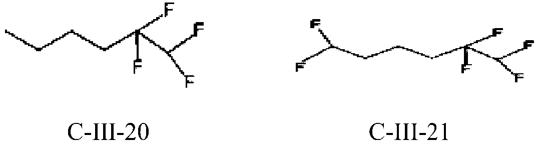

For example, the compound represented by formula (C-III) may include at least one of compounds represented by formulas (C-III-11) and (C-III-12).

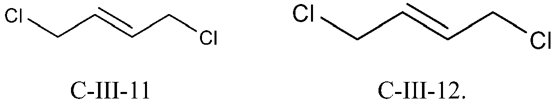

For example, the compound represented by formula (C-III) may include at least one of compounds represented by formulas (C-III-22) and (C-III-33).

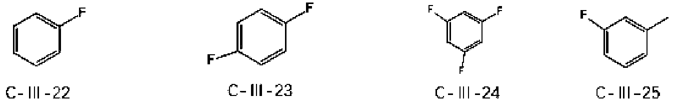

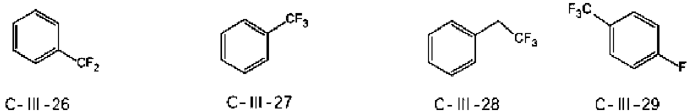

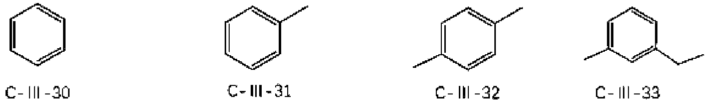

For example, the compound represented by formula (C-III) may include at least one of compounds represented by formulas (C-III-30) and (C-III-32).

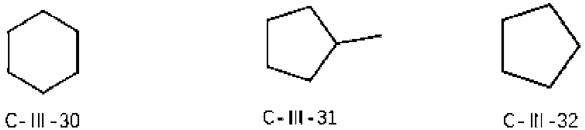

For example, the compound represented by formula (C-III) may include a compound represented by formula (C-III-33).

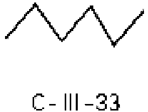

In some embodiments, the diluent includes a compound represented by formula (C-IV): 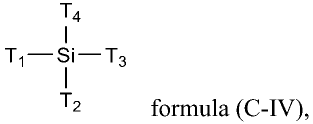 where
in formula (C-IV), T₁ to T₄ each independently include a C₁ to C₆ chain alkyl group, a cycloalkyl group, an aryl group, an alkoxy group, a chain haloalkyl group, a halocycloalkyl group, a haloaryl group, or a haloalkoxy group.

Optionally, T₁ to T₄ each independently include at least one of a C₁ to C₆ chain alkyl group, a C₃ to C₆ cycloalkyl group, an aryl group, a C₁ to C₆ alkoxy group, a C₁ to C₆ chain haloalkyl group, a C₃ to C₆ halocycloalkyl group, a haloaryl group, and a C₁ to C₆ haloalkoxy group.

For example, the compound represented by formula (C-IV) includes at least one of compounds represented by formulas (C-IV-1) to (C-IV-21).

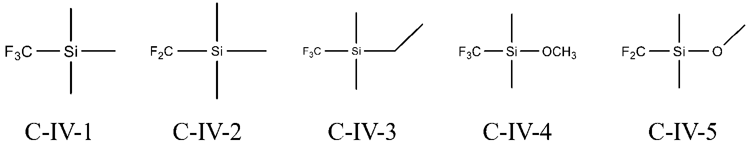

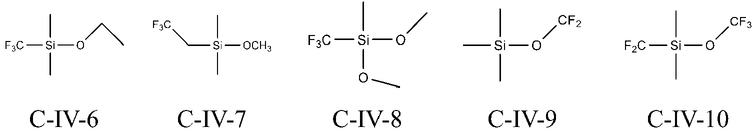

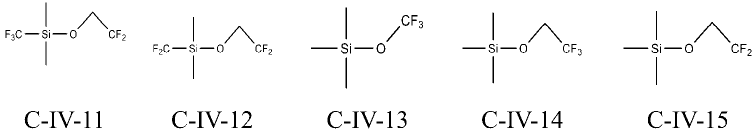

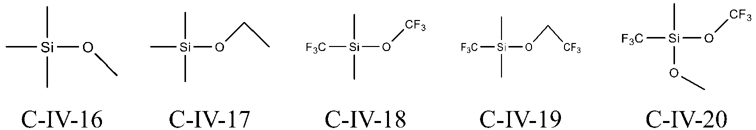

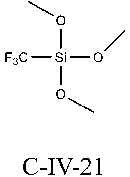

In some embodiments, the diluent includes a compound represented by formula (C-V): 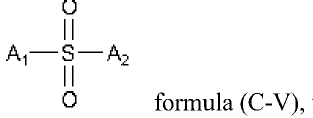 where
in formula (C-V),
A₁ includes a C₁ to C₃ alkyl group, a haloalkyl group, or a halogen atom; optionally, A₁ includes a C₁ to C₃ alkyl group, a C₁ to C₃ haloalkyl group, or a halogen atom; and
A₂ includes a C₁ to C₃ alkyl group, a haloalkyl group, an alkoxy group, a haloalkoxy group, N,N-dimethyl, N,N-diethyl, N,N-methylethyl, or a morpholinyl group; optionally, A₂ includes a C₁ to C₃ alkyl group, a C₁ to C₃ haloalkyl group, an alkoxy group, a haloalkoxy group, N,N-dimethyl, N,N-diethyl, N,N-methylethyl, or a morpholinyl group.

Optionally, the compound represented by formula (C-V) may include at least one of sulfonamide compound and sulfite compound.

For example, the compound represented by formula (C-V) may include at least one of compounds represented by formulas (C-V-1) to (C-V-17).

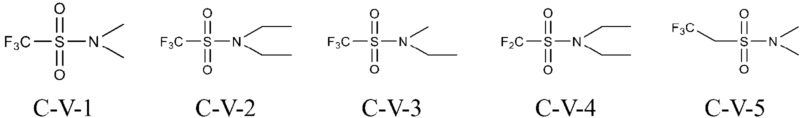

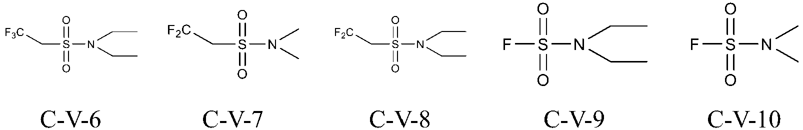

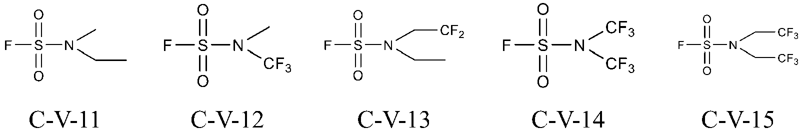

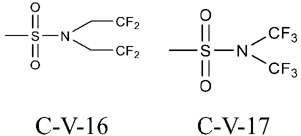

For example, the compound represented by formula (C-V) may include at least one of compounds represented by formulas (C-V-18) to (C-V-21).

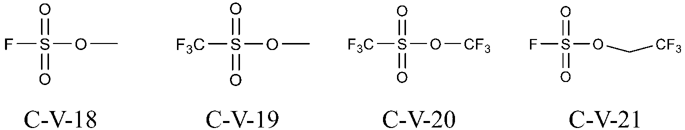

The qualitative and quantitative determination of the substances or elements in the embodiments of this application can be performed using suitable equipment and methods known to those skilled in the art. For relevant detection methods, reference can be made to domestic and international testing standards, enterprise standards, and the like, and those skilled in the art can also adapt certain detection steps/instrument parameters from the perspective of detection accuracy to obtain more accurate results. A single detection method can be used for qualitative or quantitative analysis, or multiple detection methods can be used in combination for qualitative or quantitative determination.

The types and contents of inorganic components/lithium salt molar concentrations in the electrolyte are well-known in the art and can be detected using equipment and methods known in the art. For example, ion chromatography analysis methods can be referenced, such as standard JY/T020-1996 "General Principles of Ion Chromatography", to perform qualitative or quantitative analysis of the inorganic components/lithium salt molar concentrations in the electrolyte. In the embodiments of this application, a freshly prepared electrolyte can be taken as a sample, or a battery that is fully discharged (discharged to a lower cutoff voltage, resulting in a battery state of charge of approximately 0% SOC) can be disassembled to obtain free electrolyte as a sample, and ion chromatography analysis methods can be used for detection.

The types and contents of the organic components in the electrolyte are well-known in the art and can be detected using equipment and methods known in the art. For example, gas chromatography methods can be referenced, such as GB/T9722-2006 "Chemical Reagent-General Rules for the Gas Chromatography" to perform qualitative and quantitative analysis of organic components in the electrolyte. In the embodiments of this application, a freshly prepared electrolyte can be taken as a sample, or a battery that is fully discharged (discharged to a lower cutoff voltage, resulting in a battery state of charge of approximately 0% SOC) can be disassembled to obtain free electrolyte as a sample, and ion chromatography analysis methods can be used for detection.

The viscosity of the electrolyte or the viscosity of organic solvents in the electrolyte is well-known in the art and can be detected using equipment and methods known in the art. For example, the electrolyte can be taken as a sample, and a rotational viscometer can be used, selecting a rotor with a rotation speed set to 12 rpm and a rotation time of 5 minutes. After the value stabilizes, the viscosity value is read and recorded. After determining the type of organic solvent, the organic solvent can be taken separately as a sample, and the viscosity value can be tested according to the above method.

The ionic conductivity of the electrolyte is well-known in the art and can be detected using equipment and methods known in the art. For example, the electrolyte can be taken as a sample, and the ionic conductivity can be measured at room temperature using a conductivity meter.

### Lithium metal battery

In a second aspect, the embodiments of this application propose a lithium metal battery, where the lithium metal battery includes the electrolyte according to any embodiment of the first aspect of this application. The cycling performance of the lithium metal battery can be improved.

### [Negative electrode plate]

The lithium metal battery further includes a negative electrode plate. During the cyclic charge and discharge of the lithium metal battery, accompanied by the deposition and stripping of lithium metal, the negative electrode plate, in combination with the above electrolyte, exhibits high stability with the electrolyte, mitigating oxidative decomposition of the electrolyte. The interface performance between the electrolyte and the negative electrode plate is more stable, enhancing the cycling performance of the lithium metal battery, particularly improving the cycle life under high voltages.

In some embodiments, the negative electrode plate may include a negative electrode current collector. During charge of the lithium metal battery, lithium ions deposit on the surface of the negative electrode current collector to form a lithium metal layer; during discharge of the lithium metal battery, the lithium metal layer loses electrons to form lithium ions, which migrate to the positive electrode active material.

The negative electrode current collector may be a metal foil or a composite current collector. As an example of a metal foil, copper foil may be used. The composite current collector may include a polymer material substrate and a metal material layer formed on at least one surface of the polymer material substrate. As an example, a main material of the metal material layer may include at least one of copper, copper alloy, nickel, nickel alloy, titanium, titanium alloy, silver, and silver alloy. As an example, the polymer material substrate may include at least one of polypropylene PP, polyethylene terephthalate PET, polybutylene terephthalate PBT, polystyrene PS, and polyethylene PE.

The negative electrode plate does not exclude additional functional layers. For example, in some embodiments, the negative electrode plate of this application further includes a conductive layer (for example, formed by a conductive agent and a binder) disposed on the surface of the negative electrode current collector. In other embodiments, the negative electrode plate in the embodiments of this application further includes a protective layer covering the surface of the negative electrode current collector.

Optionally, the negative electrode plate may further include a conductive layer disposed on at least one side of the negative electrode current collector, where the conductive layer includes a negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers.

Further optionally, the conductive layer may further include a negative electrode binder. As an example, the negative electrode binder may include at least one of styrene-butadiene rubber SBR, water-soluble unsaturated resin SR-1B, aqueous acrylic resin (such as polyacrylic acid PAA, polymethacrylic acid PMAA, and sodium polyacrylate PAAS), polyacrylamide PAM, polyvinyl alcohol PVA, sodium alginate SA, and carboxymethyl chitosan CMCS.

In other embodiments, the negative electrode plate may include a negative electrode current collector and a lithium metal layer disposed on at least one side of the negative electrode current collector. For example, the negative electrode current collector has two opposite surfaces in its thickness direction, and the lithium metal layer is disposed on either or both of the two opposite surfaces of the negative electrode current collector. The lithium metal layer may be disposed on the negative electrode current collector in the form of lithium foil.

Optionally, in addition to lithium metal, the lithium metal layer may further include a non-lithium element capable of forming alloys with lithium, where the non-lithium element may include at least one of a metal element and a metalloid element. For example, the metal element may include at least one element of tin Sn, zinc Zn, aluminum Al, magnesium Mg, silver Ag, gold Au, gallium Ga, indium In, and platinum Pt. For example, the metalloid element may include at least one of boron B, carbon C, and silicon Si.

The material of the negative electrode current collector is as described above and is not be repeated herein.

The negative electrode plate does not exclude additional functional layers. For example, in some embodiments, the negative electrode plate in the embodiments of this application further includes a conductive layer (for example, formed by a conductive agent and a binder) disposed on the surface of the negative electrode current collector. In other embodiments, the negative electrode plate in the embodiments of this application further includes a protective layer covering the surface of the negative electrode current collector.

Optionally, the negative electrode plate may further include a conductive layer, where the conductive layer is disposed between the negative electrode current collector and the lithium metal layer, and the conductive layer includes a negative electrode conductive agent. The material of the negative electrode conductive agent is as described above and is not be repeated herein. Further optionally, the conductive layer may further include a negative electrode binder. The material of the negative electrode binder is as described above and is not be repeated herein.

### [Positive electrode plate]

In some embodiments, the lithium metal battery may further include a positive electrode plate.

The positive electrode plate includes a positive electrode current collector and a positive electrode film layer that is disposed on at least one surface of the positive electrode current collector and that includes a positive electrode active material. For example, the positive electrode current collector has two opposite surfaces in its thickness direction, and the positive electrode film layer is disposed on either or both of the two opposite surfaces of the positive electrode current collector.

The positive electrode active material may be a positive electrode active material known in the art for lithium metal batteries. As an example, the positive electrode active material may include at least one of the following materials: lithium-containing transition metal oxide and lithium-containing phosphate with an olivine structure.

In some embodiments, the lithium-containing transition metal oxide may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

For example, a general formula of the lithium-containing transition metal oxide is LiₓA_{y}NiₐCo_{b}Mn_{c}M_{(1-a-b-c)}Y_{z}, where 0 < x ≤ 2.1, 0 ≤ y ≤ 2.1, and 0.9 ≤ x + y ≤ 2.1; 0 ≤ a ≤ 1, 0 ≤ b ≤ 1, 0 ≤ c ≤ 1, and 0.1 ≤ a + b + c ≤ 1; 1.8 ≤ z ≤ 3.5; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Optionally, y = 0. The above lithium-containing transition metal oxide can enhance the energy density of the lithium metal battery, and when used in combination with the above electrolyte, the stability of the electrolyte on the positive electrode side is relatively high, which is beneficial for improving the cycling performance of the lithium metal battery.

Optionally, 0 < b < 1.

Optionally, 0 < c < 1.

Optionally, 0 < a + b + c < 1.

Optionally, 0 < a < 1; further optionally, 0.8 ≤ a < 1.

Herein, a may be 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1, or a range defined by any two of the above values.

Specifically, the lithium-containing transition metal oxide may include one or more of lithium cobalt oxide LCO, lithium nickel oxide LNO, lithium manganese oxide LMO, LiNi_{1/3}Co_{1/3}Mn_{1/3}O₂ (NCM333), LiNi_{0.8}Co_{0.1}Mn_{0.1}O₂ (NCM811), LiNi_{0.5}Co_{0.2}Mn_{0.3}O₂ (NCM523), LiNi_{0.5}Co_{0.25}Mn_{0.25}O₂ (NCM₂₁₁), LiNi_{0.6}Co_{0.2}Mn_{0.2}O₂ (NCM₆₂₂), LiNi_{0.96}Co_{0.02}Mn_{0.02}O₂ (Ni₉₆), and lithium nickel cobalt aluminum oxide (such as LiNi_{0.80}Co_{0.15}Al_{0.05}O₂).

For example, a general formula of the olivine-type phosphate active material is LiₓA_{y}MeₐQ_{b}P_{1-c}X_{c}T_{z}, where 0 ≤ x ≤ 1.3, 0 ≤ y ≤ 1.3, and 0.9 ≤ x + y ≤ 1.3; 0.9 ≤ a ≤ 1.5, 0 ≤ b ≤ 0.5, and 0.9 ≤ a + b ≤ 1.5; 0 ≤ c ≤ 0.5; 3 ≤ z ≤ 5; A is selected from one or more of Na, K, and Mg; Me is selected from one or more of Mn, Fe, Co, and Ni; Q is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; and T is selected from one or more of O and F. Specifically, the olivine-type phosphate active material includes one or more of LiFePO₄, LiMnPO₄, LiNiPO₄, and LiCoPO₄.

In the embodiments of this application, the above positive electrode active materials may alternatively be modified compounds, and the modification of the modified compounds may be doping and/or surface coating on the positive electrode active materials. For example, doping modification can be performed by doping with a transition metal element. For example, coating modification can be performed by coating the material surface with a carbon layer.

During the charge and discharge of the lithium metal battery, active ions such as Li undergo intercalation and deintercalation, and are consumed, resulting in different molar contents of Li in the lithium metal battery at different discharge states. In the embodiments of this application, the molar content of Li listed for the positive electrode active material refers to an initial state of the material, that is, a state before feeding; and after the positive electrode active material is used in the battery system, the molar content of Li may change after charge-discharge cycles.

In the embodiments of this application, the molar content of oxygen O listed for the positive electrode active material is a theoretical value, and lattice oxygen release may cause changes in the molar content of oxygen O, resulting in fluctuations in the actual molar content of oxygen O.

In some embodiments, the positive electrode film layer may optionally further include a positive electrode conductive agent. The embodiments of this application do not impose particular restrictions on the type of positive electrode conductive agent. As an example, the positive electrode conductive agent includes at least one of superconducting carbon, conductive graphite, acetylene black, carbon black, Ketjen black, carbon dots, carbon nanotubes, graphene, and carbon nanofibers. In some embodiments, based on a total mass of the positive electrode film layer, a mass percentage of the positive electrode conductive agent is less than or equal to 5%.

In some embodiments, the positive electrode film layer may optionally further include a positive electrode binder. The embodiments of this application do not impose particular restrictions on the type of positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, based on the total mass of the positive electrode film layer, a mass percentage of the positive electrode binder is less than or equal to 5%.

In some embodiments, the positive electrode current collector may be a metal foil or a composite current collector. As an example of a metal foil, aluminum foil may be used. The composite current collector may include a polymer material substrate and a metal material layer formed on at least one surface of the polymer material substrate. As an example, the metal material of the metal material layer may include at least one of aluminum, aluminum alloy, nickel, nickel alloy, titanium, titanium alloy, silver, and silver alloy. As an example, the polymer material substrate may include at least one of polypropylene PP, polyethylene terephthalate PET, polybutylene terephthalate PBT, polystyrene PS, and polyethylene PE.

The positive electrode film layer is typically formed by applying a positive electrode slurry to the positive electrode current collector, followed by drying and cold pressing. The positive electrode slurry is usually formed by dispersing and uniformly stirring the positive electrode active material, optional conductive agent, optional binder, and any other components in a solvent. The solvent may be N-methylpyrrolidone NMP, but is not limited thereto.

### [Separator]

In some embodiments, the lithium metal battery may further include a separator.

The embodiments of this application do not impose particular restrictions on the type of separator, and any well-known porous structure separator with good chemical and mechanical stability can be used.

In some embodiments, the material of the separator may include at least one of glass fiber, non-woven fabric, polyethylene, polypropylene, and polyvinylidene fluoride. The separator may be a single-layer film or a multilayer composite film. This is not particularly limited. When the separator is a multilayer composite film, materials of the layers may be the same or different. This is not particularly limited.

In some embodiments, the positive electrode plate, separator, and negative electrode plate can be formed into an electrode assembly through a winding process and/or a lamination process.

In some embodiments, the lithium metal battery may include an outer packaging. The outer packaging may be used to encapsulate the above electrode assembly and electrolyte.

In some embodiments, the outer packaging of the lithium metal battery may be a hard shell, such as a hard plastic shell, an aluminum shell, or a steel shell. The outer packaging of the lithium metal battery may alternatively be a soft pack, such as a soft pouch. The material of the soft pouch may be plastic, such as at least one of polypropylene, polybutylene terephthalate, and polybutylene succinate.

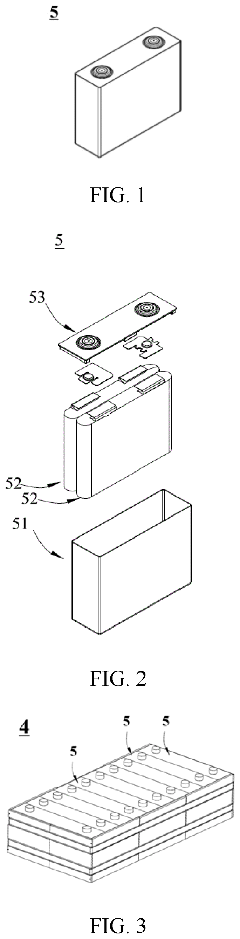

The embodiments of this application do not impose particular restrictions on a shape of the lithium metal battery, which may be cylindrical, prismatic, or any other shape. FIG. 1 shows, as an example, a lithium metal battery 5 with a prismatic structure.

In some embodiments, as shown in FIG. 2, the outer packaging may include a housing 51 and a cover plate 53. The housing 51 may include a bottom plate and a side plate connected to the bottom plate, with the bottom plate and side plate enclosing a receiving cavity. The housing 51 has an opening communicating with the receiving cavity, and the cover plate 53 is used to cover the opening to seal the receiving cavity. The positive electrode plate, negative electrode plate, and separator may form an electrode assembly 52 through a winding process and/or a lamination process. The electrode assembly 52 is encapsulated in the receiving cavity. The electrolyte infiltrates the electrode assembly 52. There may be one or more electrode assemblies 52 contained in the lithium metal battery 5. The quantity can be adjusted according to requirements.

The preparation method of the lithium metal battery in the embodiments of this application is well-known. In some embodiments, the positive electrode plate, separator, negative electrode plate, and electrolyte can be assembled to form a lithium metal battery. As an example, the positive electrode plate, separator, and negative electrode plate can form an electrode assembly through a winding process and/or a lamination process. The electrode assembly is placed in an outer packaging, dried, injected with electrolyte, and subjected to processes such as vacuum encapsulation, standing, formation, and shaping to obtain a lithium metal battery.

In some embodiments of this application, the lithium metal battery according to the embodiments of this application can be assembled into a battery module. There may be multiple lithium metal batteries contained in the battery module. The specific quantity can be adjusted according to the application and capacity of the battery module.

FIG. 3 is a schematic diagram of an example battery module 4. As shown in FIG. 3, in the battery module 4, multiple lithium metal batteries 5 may be arranged sequentially along a length direction of the battery module 4. Certainly, they may be arranged in any other manner. Further, the multiple lithium metal batteries 5 may be fastened by fasteners.

Optionally, the battery module 4 may further include a casing with a receiving space, and the multiple lithium metal batteries 5 are accommodated in the receiving space.

In some embodiments, the above battery module may be further assembled into a battery pack, and a quantity of battery modules contained in the battery pack may be adjusted according to the application and capacity of the battery pack.

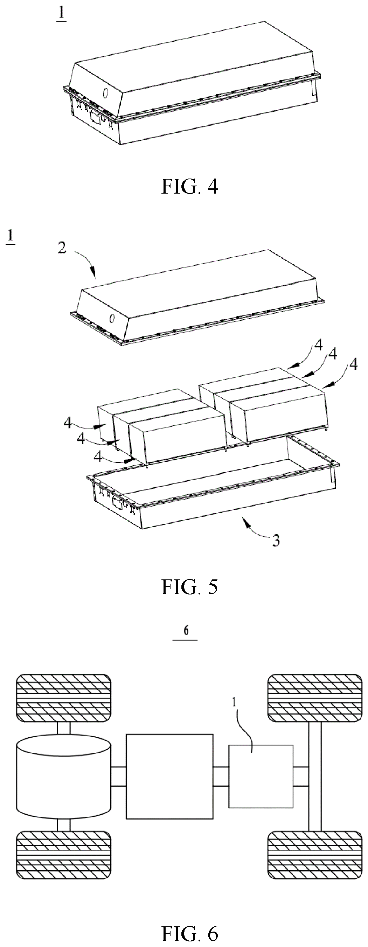

FIG. 4 and FIG. 5 are schematic diagrams of an example battery pack 1. As shown in FIG. 4 and FIG. 5, the battery pack 1 may include a battery box and multiple battery modules 4 disposed in the battery box. The battery box includes an upper case 2 and a lower case 3, with the upper case 2 used to cover the lower case 3 to form a closed space for accommodating the battery modules 4. The multiple battery modules 4 may be arranged in the battery box in any manner.

### Electric apparatus

In a third aspect, the embodiments of this application propose an electric apparatus, where the electric apparatus includes at least one of the lithium metal battery, battery module, or battery pack in the embodiments of this application. The lithium metal battery, battery module, or battery pack may be used as a power source for the electric apparatus or as an energy storage unit for the electric apparatus. The electric apparatus may include, but is not limited to, mobile devices (such as mobile phones and laptops), electric vehicles (such as pure electric vehicles, hybrid electric vehicles, plug-in hybrid electric vehicles, electric bicycles, electric scooters, electric golf carts, and electric trucks), electric trains, ships, satellites, energy storage systems, and the like.

A lithium metal battery, battery module, or battery pack may be selected for the electric apparatus according to its usage requirements.

FIG. 6 is a schematic diagram of an example electric apparatus 6. The electric apparatus 6 is a pure electric vehicle, a hybrid electric vehicle, a plug-in hybrid electric vehicle, or the like. To meet the high power and high energy density requirements of the electric apparatus 6, a battery pack or battery module may be used.

As another example, the electric apparatus may be a mobile phone, tablet, laptop, or the like. Such electric apparatuses typically require thin and lightweight designs, and therefore, a lithium metal battery may be used as a power source.

### Examples

The following examples describe the content disclosed in the embodiments of this application more specifically. These examples are for illustrative purposes only, as various modifications and changes within the scope of the disclosed content in the embodiments of this application are apparent to those skilled in the art. Unless otherwise stated, all parts, percentages, and ratios reported in the following examples are by mass, all reagents used in the examples are commercially available or synthesized by conventional methods and can be used directly without further processing, and all instruments used in the examples are commercially available.

### Examples and comparative examples Preparation of lithium metal battery

### 1. Preparation of positive electrode plate

The positive electrode plate included a positive electrode current collector and positive electrode film layers disposed on two sides of the positive electrode current collector. The positive electrode current collector was aluminum foil, and the positive electrode film layer was formed by uniformly applying a positive electrode slurry (with N-methylpyrrolidone NMP as the solvent) on a surface of the aluminum foil positive electrode current collector, followed by drying and cold pressing. The positive electrode film layer included a positive electrode active material, a conductive agent acetylene black, and a binder polyvinylidene fluoride (PVDF) in a weight ratio of 98:1:1.

The positive electrode active material included a compound with a molecular formula LiNi_{0.8}Co_{0.10}Mn_{0.10}O₂ (NCM811).

### 2. Preparation of negative electrode plate

The negative electrode plate included a negative electrode current collector and a lithium foil disposed on the negative electrode current collector. The negative electrode current collector was copper foil.

### 3. Separator

The separator was a polyethylene film layer.

### 4. Preparation of electrolyte

The electrolyte included an organic solvent and a lithium salt, and the organic solvent included a main solvent and a diluent.

### 5. Preparation of lithium metal battery

The positive electrode plate, separator, and negative electrode plate are stacked in order, with the separator positioned between the positive and negative electrode plates to provide isolation, forming an electrode assembly. The electrode assembly is placed in an outer packaging shell, dried, injected with electrolyte, and subjected to processes such as vacuum encapsulation, standing, formation, and shaping to obtain a laminated lithium metal battery.

**The compositions of electrolytes in examples and comparative examples are shown in Table 1.**

### Performance test

### 1. Room temperature cycling performance test of lithium metal battery

At 25°C, the lithium metal batteries prepared in the examples and comparative examples were charged at 0.2C (that is, 28 mA) and discharged at 1C (that is, 140 mA) for charge-discharge cycles.

The charge and discharge cutoff voltages were set to 4.3V and 2.8V, respectively. A constant current-constant voltage charge method was used for charge. Specifically, after being charged at a constant current of 0.2C to the cutoff voltage of 4.3V, the battery was charged at a constant voltage of 4.3V until the current decayed to 0.1C (that is, 14 mA). When the discharge capacity decayed to 80% of the initial discharge capacity, the battery life was considered to terminate, and the number of cycles at this point was recorded.

### Test results

The test results are shown in Table 1.

**Table 1**

| No. | Electrolyte | | | | | | | | | | Battery |
|---|---|---|---|---|---|---|---|---|---|---|---|
| | Lithium salt | | Main solvent | | | Diluent | | | Ionic conductivity (mS/cm) | Viscosity (mPa·s) | 25°C cycle life (cycles) |
| | Material | Molar concentration in electrolyte (mol/L) | Material | Mass percentage (%) | Relative molecular weight | Material | Mass percentage (%) | Relative molecular weight | | | |
| Example 1 | LiFSI | 3.0 | DME | 30 | 118.17 | C-II-4 | 70 | 110.1 | 4.1 | 3.8 | 602 |
| Example 2 | LiPF₆ | 3.0 | DME | 30 | 118.17 | C-II-4 | 70 | 110.1 | 2.8 | 3.9 | 497 |
| Example 3 | LiDFOB | 3.0 | DME | 30 | 118.17 | C-II-4 | 70 | 110.1 | 3.4 | 4.3 | 533 |
| Example 4 | LiFSI | 3.0 | DMP | 30 | 104.15 | C-II-4 | 70 | 110.1 | 3.2 | 4.0 | 581 |
| Example 5 | LiFSI | 3.0 | Diethyl carbonate | 30 | 118.13 | C-II-4 | 70 | 110.1 | 3.1 | 4.4 | 477 |
| Example 6 | LiFSI | 3.0 | Tetrahydrofuran | 30 | 72.11 | C-II-4 | 70 | 110.1 | 3.2 | 4.2 | 510 |
| Example 7 | LiFSI | 3.0 | Sulfoxide | 30 | 104.17 | C-II-4 | 70 | 110.1 | 3.1 | 4.5 | 433 |
| Example 8 | LiFSI | 3.0 | Propionitrile | 30 | 55.08 | C-II-4 | 70 | 110.1 | 3.8 | 4.0 | 529 |
| Example 9 | LiFSI | 3.0 | Dimethylacetamide | 30 | 87.12 | C-II-4 | 70 | 110.1 | 3.6 | 4.2 | 521 |
| Example 10 | LiFSI | 3.0 | Dimethoxydimethylsilane | 30 | 120.22 | C-II-4 | 70 | 110.1 | 3.1 | 4.4 | 440 |
| Example 11 | LiFSI | 3.0 | 1-methoxy-1-ethoxymethane | 30 | 90.12 | C-II-4 | 70 | 110.1 | 3.8 | 4.2 | 517 |
| Example 12 | LiFSI | 3.0 | DME | 30 | 118.17 | C-II-3 | 70 | 146.09 | 3.9 | 3.8 | 597 |
| Example 13 | LiFSI | 3.0 | DME | 30 | 118.17 | C-II-21 | 70 | 126.1 | 3.9 | 3.9 | 593 |
| Example 14 | LiFSI | 3.0 | DME | 30 | 118.17 | C-II-32 | 70 | 118.15 | 3.8 | 4.1 | 570 |
| Example 15 | LiFSI | 3.0 | DME | 30 | 118.17 | C-III-30 | 70 | 78.11 | 4.0 | 3.8 | 596 |
| Example 16 | LiFSI | 3.0 | DME | 30 | 118.17 | C-I-20 | 70 | 166.02 | 4.0 | 3.9 | 544 |
| Example 17 | LiFSI | 3.0 | DME | 30 | 118.17 | C-I-7 | 70 | 144.03 | 3.9 | 4.1 | 539 |
| Example 18 | LiFSI | 3.0 | DME | 30 | 118.17 | C-I-23 | 70 | 141.1 | 2.2 | 4.3 | 502 |
| Example 19 | LiFSI | 3.0 | DME | 30 | 118.17 | C-IV-9 | 70 | 140.21 | 2.3 | 4.6 | 493 |
| Example 20 | LiFSI | 3.0 | DME | 30 | 118.17 | C-V-1 | 70 | 177.09 | 2.5 | 4.2 | 535 |
| Example 21 | LiFSI | 1.0 | DME | 30 | 118.17 | C-II-4 | 70 | 110.1 | 3.0 | 3.3 | 478 |
| Example 22 | LiFSI | 2.0 | DME | 30 | 118.17 | C-II-4 | 70 | 110.1 | 3.6 | 3.6 | 567 |
| Example 23 | LiFSI | 3.5 | DME | 30 | 118.17 | C-II-4 | 70 | 110.1 | 4.0 | 4.3 | 572 |
| Example 24 | LiFSI | 4.0 | DME | 30 | 118.17 | C-II-4 | 70 | 110.1 | 3.5 | 5.1 | 479 |
| Example 25 | LiFSI | 3.0 | DME | 10 | 118.17 | C-II-4 | 90 | 110.1 | 3.3 | 3.8 | 538 |
| Example 26 | LiFSI | 3.0 | DME | 20 | 118.17 | C-II-4 | 80 | 110.1 | 3.6 | 3.8 | 571 |
| Example 27 | LiFSI | 3.0 | DME | 40 | 118.17 | C-II-4 | 60 | 110.1 | 4.3 | 4.0 | 584 |
| Example 28 | LiFSI | 3.0 | DME | 80 | 118.17 | C-II-4 | 20 | 110.1 | 4.5 | 4.2 | 522 |
| Comparative example 1 | LiPF₆ | 1.0 | Ethylene carbonate | 30 | 88.06 | Ethyl methyl carbonate | 70 | 104.1 | 12.0 | 3.4 | 121 |
| Comparative example 2 | LiFSI | 3.0 | - | - | | C-II-4 | 100 | 110.1 | Insoluble | / | / |
| Comparative example 3 | LiFSI | 3.0 | DME | 100 | 118.17 | - | - | | 6.3 | 15.4 | 318 |
| Comparative example 4 | LiFSI | 0.5 | DME | 30 | 118.17 | C-II-4 | 70 | 110.1 | 2.6 | 3.2 | 377 |
| Comparative example 5 | LiFSI | 4.5 | DME | 30 | 118.17 | C-II-4 | 70 | 110.1 | 3.2 | 7.2 | 381 |

The mass percentage of the main solvent in Table 1 is calculated based on the total mass of the main solvent and the diluent.

The mass percentage of the diluent is calculated based on the total mass of the main solvent and the diluent.

DME represents 1,2-diethoxyethane; and DMP represents 1,3-dimethoxypropane.

C-II-4 represents the compound represented by formula (C-II-4).

In Table 1, the solubility of the lithium salt in the diluent is less than or equal to 0.1 g/100 g.

From Table 1, it can be learned that the electrolyte in Comparative example 1 uses ethylene carbonate and ethyl methyl carbonate as organic solvents and 1.0 mol/L lithium hexafluorophosphate LiPF₆ as the lithium salt. When this electrolyte contacts the lithium metal negative electrode, ethylene carbonate and ethyl methyl carbonate preferentially decompose to form a film, which is detrimental to the cycling of the lithium metal negative electrode and prone to capacity drop. In the examples of this application, a specific organic solvent system and the lithium salt can form an electrolyte system with a localized high molar concentration, allowing the lithium salt to preferentially decompose to form a film, significantly improving cycling performance at room temperature.

In Comparative example 2, only the diluent of the examples of this application is used; and in Comparative example 3, only the main solvent of the examples of this application is used, neither of which can achieve an electrolyte system with a low viscosity and a high molar concentration of lithium salt, and therefore cannot effectively improve the cycling performance of lithium metal batteries. In the examples of this application, the material of the organic solvent system was selected, enabling the main solvent in the organic solvent to form a high-molar-concentration solvation structure with a high molar concentration of lithium salt, and the diluent is responsible for dilution, so that the electrolyte further forms an electrolyte system with a localized high molar concentration, reducing the viscosity of the electrolyte, and thereby improving the cycle life of the lithium metal battery. From Comparative examples 4 and 5, it can be learned that, in the same material system, a molar concentration of lithium salt that is excessively low (that is, less than 1 mol/L) or excessively high (that is, greater than 4 mol/L) is not conducive to improving the cycle life of the lithium metal battery. In the examples of this application, when the molar concentration is 1 mol/L to 4 mol/L, in combination with the main solvent and the diluent, the lithium salt enables the electrolyte to further form an electrolyte system with a localized high molar concentration, reducing the viscosity of the electrolyte, and thereby improving the cycle life of the lithium metal battery.

Examples 1 to 3 show that adjusting the material of the lithium salt can still improve the cycle life of the lithium metal battery, where the lithium salt may optionally be lithium bis(fluorosulfonyl)imide LiFSI, which promotes the formation of an inorganic-rich SEI film.

Examples 1 and 4 to 11 show that adjusting the material of the main solvent can further improve the cycle life of the lithium metal battery; particularly when the main solvent includes at least one of DME and DMP, the cycle life of the lithium metal battery can be significantly improved.

Examples 1 and 12 to 20 show that adjusting the material of the diluent can further improve the cycle life of the lithium metal battery; particularly when the diluent includes at least one of the compounds represented by formulas (C-II-3), (C-II-4), (C-II-21), (C-II-32), and (C-II-30), the cycle life of the lithium metal battery can be significantly improved.

Examples 1 and 21 to 24 show that adjusting the molar concentration of the lithium salt can further improve the cycle life of the lithium metal battery; particularly when the molar concentration of the lithium salt is 1.5 mol/L to 4 mol/L, optionally 2 mol/L to 4 mol/L, further optionally 2 mol/L to 3.5 mol/L, the cycle life of the lithium metal battery can be significantly improved.

Examples 1 and 25 to 28 show that adjusting the mass percentages of the main solvent and the diluent can further improve the cycle life of the lithium metal battery; particularly when the percentage of the main solvent is 20% to 80%, optionally 30% to 40%, the cycle life of the lithium metal battery can be significantly improved.

The above descriptions are merely specific embodiments of this application, but the protection scope of this application is not limited thereto. Any person skilled in the art can easily conceive of various equivalent modifications or substitutions within the technical scope disclosed in this application, and these modifications or substitutions should be included within the protection scope of this application. Therefore, the protection scope of this application shall be subject to the protection scope of the claims.

## Claims

1. An electrolyte for lithium metal battery, comprising a main solvent, a diluent, and a lithium salt, wherein a molar concentration of the lithium salt is 1 mol/L to 4 mol/L, and a viscosity of the electrolyte is less than or equal to 5.5 mPa·s.

2. The electrolyte according to claim 1, wherein the viscosity of the electrolyte is less than or equal to 4 mPa·s; and/or
an ionic conductivity of the electrolyte is 2 mS/cm to 5 mS/cm.

3. The electrolyte according to claim 1 or 2, wherein the molar concentration of the lithium salt is 2 mol/L to 3.5 mol/L.

4. The electrolyte according to any one of claims 1 to 3, wherein the lithium salt comprises at least one of a fluorine-containing lithium salt, lithium bis(oxalate)borate, and lithium perchlorate.

5. The electrolyte according to any one of claims 1 to 4, wherein the fluorine-containing lithium salt comprises at least one of a fluorine-containing sulfonimide lithium salt, a fluorine-containing phosphate lithium salt, a fluorine-containing borate lithium salt, a fluorine-containing oxalate phosphate lithium salt, lithium hexafluoroarsenate, lithium trifluoromethanesulfonate, and lithium difluoro(oxalate)borate.

6. The electrolyte according to any one of claims 1 to 5, wherein the fluorine-containing sulfonimide lithium salt comprises at least one of lithium bis(fluorosulfonyl)imide and lithium bis(trifluoromethanesulfonyl)imide.

7. The electrolyte according to any one of claims 1 to 6, wherein based on a total mass of the main solvent and the diluent, a mass percentage of the main solvent is 10% to 80%; or
based on the total mass of the main solvent and the diluent, a mass percentage of the diluent is 20% to 90%.

8. The electrolyte according to claim 7, wherein the mass percentage of the main solvent is 20% to 40%.

9. The electrolyte according to any one of claims 1 to 8, wherein
a relative molecular weight of the main solvent is 40 to 150; and/or a viscosity of the main solvent is less than or equal to 5 mPa·s.

10. The electrolyte according to any one of claims 1 to 9, wherein the main solvent comprises at least one of ester solvent, ether solvent, sulfone solvent, nitrile solvent, amide solvent, and siloxane solvent.

11. The electrolyte according to claim 10, wherein the ether solvent comprises at least one of C₄ to C₆ linear ether, C₃ to C₁₀ alkoxyalkane, C₃ to C₆ epoxyalkane, and trimethoxymethane.

12. The electrolyte according to any one of claims 1 to 11, wherein
a relative molecular weight of the diluent is 60 to 190; and/or a viscosity of the diluent is less than or equal to 5 mPa·s.

13. The electrolyte according to any one of claims 1 to 12, wherein the diluent comprises a compound represented by formula (C-I): 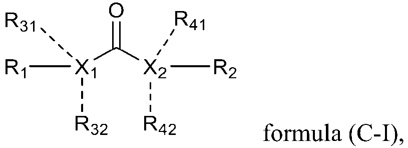 wherein
in formula (C-I),
X₁ and X₂ each independently comprise a carbon atom, an oxygen atom, or a nitrogen atom;
R₁ and R₂ each independently comprise a C₁ to C₆ chain alkyl group, a cycloalkyl group, an aryl group, a C₁ to C₆ chain haloalkyl group, a halocycloalkyl group, a haloaryl group, or a halogen atom;
R₃₁ and R₃₂ are absent or each independently comprise a hydrogen atom, a C₁ to C₆ chain alkyl group, a cycloalkyl group, an aryl group, a C₁ to C₆ chain haloalkyl group, a halocycloalkyl group, a haloaryl group, or a halogen atom, wherein
when X₁ is a carbon atom, R₃₁ and R₃₂ each independently comprise a hydrogen atom or a halogen atom;
when X₁ is an oxygen atom, R₃₁ and R₃₂ are absent; or
when X₁ is a nitrogen atom, one of R₃₁ and R₃₂ comprises a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; and the other is absent; and
R₄₁ and R₄₂ are absent or each independently comprise a hydrogen atom, a C₁ to C₆ chain alkyl group, a cycloalkyl group, an aryl group, a C₁ to C₆ chain haloalkyl group, a halocycloalkyl group, a haloaryl group, or a halogen atom, wherein
when X₂ is a carbon atom, R₄₁ and R₄₂ each independently comprise a hydrogen atom or a halogen atom;
when X₂ is an oxygen atom, R₄₁ and R₄₂ are absent; or
when X₂ is a nitrogen atom, one of R₄₁ and R₄₂ comprises a hydrogen atom, a C₁ to C₆ chain alkyl group, a cycloalkyl group, an aryl group, a C₁ to C₆ chain haloalkyl group, a halocycloalkyl group, a haloaryl group, or a halogen atom; and the other is absent.

14. The electrolyte according to any one of claims 1 to 13, wherein the diluent comprises a compound represented by formula (C-IIa): 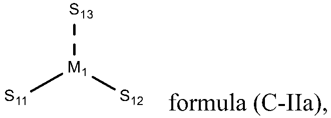 wherein
in formula (C-IIa),
M₁ comprises an oxygen atom, a nitrogen atom, or a sulfur atom;
S₁₁ and S₁₂ each independently comprise a C₁ to C₆ chain alkyl group, a cycloalkyl group, an aryl group, a C₁ to C₆ chain haloalkyl group, a halocycloalkyl group, or a haloaryl group; and
S₁₃ is absent or comprises a C₁ to C₆ chain alkyl group, a cycloalkyl group, an aryl group, a C₁ to C₆ chain haloalkyl group, a halocycloalkyl group, or a haloaryl group, wherein
when M₁ is an oxygen atom or a sulfur atom, S₁₃ is absent; or
when M₁ is a nitrogen atom, S₁₃ comprises a C₁ to C₆ chain alkyl group, a cycloalkyl group, an aryl group, a C₁ to C₆ chain haloalkyl group, a halocycloalkyl group, or a haloaryl group.

15. The electrolyte according to any one of claims 1 to 14, wherein the diluent comprises a compound represented by formula (C-IIb): 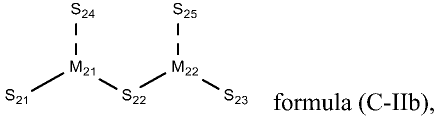 wherein
in formula (C-IIb),
M₂₁ and M₂₂ each independently comprise an oxygen atom, a nitrogen atom, or a sulfur atom;
S₂₁ and S₂₃ each independently comprise a C₁ to C₆ chain alkyl group, a cycloalkyl group, an aryl group, a C₁ to C₆ chain haloalkyl group, a halocycloalkyl group, or a haloaryl group;
S₂₂ comprises an alkylene group or a haloalkylene group; and
S₂₄ is absent or comprises a C₁ to C₆ chain alkyl group, a cycloalkyl group, an aryl group, a C₁ to C₆ chain haloalkyl group, a halocycloalkyl group, or a haloaryl group, wherein
when M₂₁ is an oxygen atom or a sulfur atom, S₂₄ is absent; or
when M₂₁ is a nitrogen atom, S₂₄ comprises a C₁ to C₆ chain alkyl group, a C₃ to C₆ cycloalkyl group, an aryl group, a C₁ to C₆ chain haloalkyl group, a C₃ to C₆ halocycloalkyl group, or a haloaryl group.

16. The electrolyte according to any one of claims 1 to 15, wherein the diluent comprises a compound represented by formula (C-IIc): 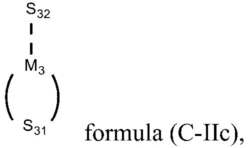 wherein
in formula (C-IIc),
M₃ comprises at least one of an oxygen atom, a nitrogen atom, and a sulfur atom;
S₃₁ comprises an alkylene group or a haloalkylene group; and
S₃₂ is absent or comprises a C₁ to C₆ chain alkyl group, a cycloalkyl group, an aryl group, a C₁ to C₆ chain haloalkyl group, a halocycloalkyl group, or a haloaryl group, wherein
when M₃ is an oxygen atom or a sulfur atom, S₃₂ is absent; or
when M₃ is a nitrogen atom, S₃₂ comprises a C₁ to C₆ chain alkyl group, a cycloalkyl group, an aryl group, a C₁ to C₆ chain haloalkyl group, a halocycloalkyl group, or a haloaryl group.

17. The electrolyte according to any one of claims 1 to 16, wherein the diluent comprises a compound represented by formula (C-III):
CₘHₙQ_{y} formula (C-III),
wherein
in formula (C-III),
m is any positive integer selected from 1 to 8;
y is any integer selected from 0 to 10;
y/n is any value from 0.25 to 5; and
Q comprises a halogen atom.

18. The electrolyte according to any one of claims 1 to 17, wherein the diluent comprises a compound represented by formula (C-IV): 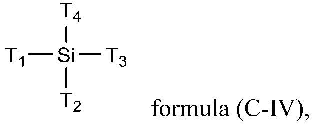 wherein
in formula (C-IV),
T₁ to T₄ each independently comprise a C₁ to C₆ chain alkyl group, a cycloalkyl group, an aryl group, an alkoxy group, a chain haloalkyl group, a halocycloalkyl group, a haloaryl group, or a haloalkoxy group.

19. The electrolyte according to any one of claims 1 to 18, wherein the diluent comprises a compound represented by formula (C-V): 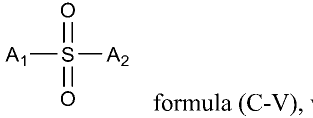 wherein
in formula (C-V),
A₁ comprises a C₁ to C₃ alkyl group, a haloalkyl group, or a halogen atom; and
A₂ comprises a C₁ to C₃ alkyl group, a haloalkyl group, an alkoxy group, a haloalkoxy group, N,N-dimethyl, N,N-diethyl, N,N-methylethyl, or a morpholinyl group.

20. A lithium metal battery, comprising the electrolyte according to any one of claims 1 to 19.

21. The lithium metal battery according to claim 20, wherein the lithium metal battery comprises a negative electrode plate; and
the negative electrode plate comprises a negative electrode current collector; or
the negative electrode plate comprises a negative electrode current collector and a lithium metal layer disposed on at least one side of the negative electrode current collector.

22. The lithium metal battery according to claim 20 or 21, wherein the lithium metal battery further comprises a positive electrode plate, wherein the positive electrode plate comprises a positive electrode current collector and a positive electrode film layer that is disposed on at least one side of the positive electrode current collector and that comprises a positive electrode active material; and
the positive electrode active material comprises a compound represented by a general formula LiₓA_{y}NiₐCo_{b}Mn_{c}M_{(1-a-b-c})Y_{z}, wherein 0 < x ≤ 2.1, 0 ≤ y ≤ 2.1, and 0.9 ≤ x + y ≤ 2.1; 0 ≤ a ≤ 1, 0 ≤ b ≤ 1, 0 ≤ c ≤ 1, and 0.1 ≤ a + b + c ≤ 1; 1.8 ≤ z ≤ 3.5; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F.

23. A battery, comprising the lithium metal battery according to any one of claims 20 to 22.

24. An electric apparatus, comprising the battery according to claim 23.
